# EUROPEAN PATENT SPECIFICATION

(11) **EP 4 531 484 B1**
(45) Date of publication and mention of the grant of the patent: **09.09.2026**
(21) Application number: 24214392.3
(22) Date of filing: 27.07.2021
(51) Int. Cl.: H04W 74/08, H04W 74/02

(54) **CHANNEL ACCESS METHOD AND COMMUNICATION APPARATUS**
KANALZUGRIFFSVERFAHREN UND KOMMUNIKATIONSVORRICHTUNG
PROCÉDÉ D'ACCÈS À UN CANAL ET APPAREIL DE COMMUNICATION

(30) Priority: 14.08.2020 CN 202010820393
(43) Date of publication of application: 02.04.2025
(62) Document number(s) of the earlier application(s) in accordance with Art. 76 EPC: 21855350.1 / 4 192 183
(73) Proprietor: Huawei Technologies Co., Ltd., Shenzhen, Guangdong 518129 (CN)
(72) Inventor: YANG, Bo, Shenzhen, 518129 (CN); YANG, Yongchao, Shenzhen, 518129 (CN); LYU, Yunping, Shenzhen, 518129 (CN); HU, Yinliang, Shenzhen, 518129 (CN)
(74) Representative: Pfenning, Meinig & Partner mbB

(56) References cited:
- US-A1- 2013 343 305
- US-A1- 2015 181 620

## Description

### TECHNICAL FIELD

This application relates to the field of wireless fidelity technologies, and in particular, to a channel access method and an apparatus, a chip and a computer-readable storage medium.

### BACKGROUND

A WLAN operates on an unlicensed frequency band. In other words, any device that meets radio specifications may send or receive data on this frequency band. To reduce a collision between devices in the WLAN, it is stipulated that all the devices in the WLAN may perform communication by using a carrier sense multiple access with collision avoidance (carrier sense multiple access with collision avoidance, CSMA/CA) mechanism. To be specific, before sending data, all the devices in the WLAN may actively initiate a channel access procedure, and then may monitor a channel state by using the CSMA/CA mechanism, and determine whether the channel is idle. The channel is used to send data only when the channel is idle. If the channel is not idle, it indicates that the channel is being used by another device, and the channel is not used to send data. To shorten a transmission delay of traffic, an enhanced distributed channel access (enhanced distributed channel access, EDCA) technology is further introduced. However, this causes more severe traffic collisions and longer traffic delay.

Therefore, currently a method that can reduce a traffic collision is proposed. In one method, an access point (access point, AP) may send a quiet time period setup (quiet time period setup) frame to all terminals. Each terminal may determine whether to back off after receiving the frame. However, if the terminal does not actively back off, a traffic collision still exists, and the traffic delay still cannot be shortened. In another method, a channel is used based on a user priority. For example, for a slot specified for a specific user, only the specific user is allowed to access the channel, and for a slot not specified for a user, all users may contend. This can ensure that a high-priority user obtains more opportunities to access a channel, and a traffic transmission delay of the high-priority user is shortened. In this manner, if the user is set to a high priority, low-priority traffic of the user has more opportunities than high-priority traffic of other users. This is unfair to the high-priority traffic of other users and cannot satisfy traffic with a high delay requirement.

US 2015/181620A1 discloses a method of controlling channel access at a station (STA) of a wireless communication system including transmitting a first frame for initiating a transmission opportunity (TXOP) to an access point (AP) and receiving a second frame when the second frame is transmitted in response to the first frame from the AP, wherein the second frame is transmitted from the AP depending on whether a duration of the TXOP overlaps a predetermined time set by the AP.

US 2013/343305 A1 discloses a method for operating an access point. The method includes: reserving, by the access point, resources of a communications channel for a periodic restricted access window, and periodically broadcasting, by the access point, one of a Beacon frame, a short Beacon frame, and a Probe Response frame including reservation information about the periodic restricted access window. The method also includes transmitting, by the access point, a management frame to a first station during one of an association procedure and a rescheduling of a resource assignment to the first station, the management frame including information about a resource in the periodic restricted access window assigned to the first station, and exchanging, by the access point, data with the first station during the resource in the periodic restricted access window assigned to the first station.

### SUMMARY

This application provides a channel access method and an apparatus, a chip and a computer-readable storage medium, to shorten a channel access delay and meet a low-delay traffic requirement. The invention is set out in the appended set of claims.

According to a first aspect, an embodiment of this application provides a channel access method. The method may be performed by a first communication apparatus. The first communication apparatus may be a communication device or a communication apparatus that can support the communication device to implement functions required for the method, for example, a chip system. The following describes an example in which the communication device is a first device. The first device may be an AP or a STA. The method includes the following steps.

The first device receives a management frame from a first AP, where the management frame includes first indication information, the first indication information indicates at least one first reserved resource that first traffic is allowed to contention-based access, and the at least one first reserved resource includes only a time-frequency resource reserved for the first traffic. Then, the first device initiates channel access on the at least one first reserved resource, and transmits the first traffic.

In this embodiment of this application, the at least one first reserved resource includes only the time-frequency resource reserved for the first traffic. The time-frequency resource is reserved by the first AP for the first traffic to contention-based access. Because the at least one first reserved resource is specially reserved for the first traffic, it may be considered that traffic other than the first traffic does not contention-based access the at least one first reserved resource. In other words, the traffic other than the first traffic is quiet on the at least one first reserved resource. In this way, the traffic other than the first traffic does not contend with the first traffic for the at least one first reserved resource. Therefore, an opportunity for the first traffic to access a channel may be increased. In addition, each time after accessing a channel, the first device may continue to send or schedule the first traffic on the at least one first reserved resource, so that a transmission delay of the first traffic is shortened.

In a possible implementation, the at least one first reserved resource is some time-frequency resources between target beacon transmission times (target beacon transmission times, TBTTs). For example, the at least one first reserved resource may be a time period of an entire channel, or may be a time period of some resource elements (resource unit, RU) of a channel.

In a possible implementation, the AP is an AP in a multi-link device (Multi-link device, MLD) AP. The first AP operates on a plurality of links. The first indication information indicates a time-frequency resource of one of the plurality of links, or the first indication information indicates some time-frequency resources of a first link of the plurality of links. This solution can minimize the impact of resource reservation on channel usage of other traffic.

In a possible implementation, an interval *Tᵣ* between two adjacent first reserved resources is determined based on a delay requirement of the first traffic, and duration occupied by each first reserved resource is determined based on a traffic volume of the first traffic. Because the plurality of first reserved resources are determined based on an actual delay requirement and an actual traffic volume of the first traffic, the plurality of first reserved resources can meet the delay requirement of the first traffic, and also ensure proper transmission of the first traffic.

In a possible implementation, the management frame includes second indication information. The second indication information indicates at least one second reserved resource that second traffic is allowed to contention-based access. The at least one second reserved resource includes only a time-frequency resource reserved for the second traffic. The at least one second reserved resource does not overlap the at least one first reserved resource. Because multiple types of low-delay traffic may exist on a network, the AP may reserve resources for each type of traffic to meet a delay requirement of each type of low-delay traffic.

In a possible implementation, *Tᵣ* satisfies *T*ᵣ ≤ *t_{delay}*/2, where *t_{delay}* is a maximum delay allowed by the first traffic. In this solution, an interval between two adjacent first reserved resources is determined based on a maximum delay allowed by the first traffic. Even if the first traffic is aperiodic burst traffic, a delay requirement of the burst first traffic can be met when a small quantity of resources are reserved for the first traffic. Because a large quantity of reserved resources do not need to be reserved for the first traffic, resource waste can also be avoided.

In a possible implementation, the method further includes: The first device receives an action (action) frame from the first AP, where the action frame indicates a third reserved resource and indicates the first device to continue the first traffic on the third reserved resource, a start moment of the third reserved resource is later than an end moment of a first reserved resource in the at least one first reserved resource, the action frame is sent before the end moment of the first reserved resource, and transmission duration of the traffic volume of the first traffic is greater than duration occupied by the first reserved resource. Because the first traffic may have other interference on the first reserved resource, the first traffic cannot be transmitted in the duration occupied by the first reserved resource. In this solution, the first AP triggers a temporarily reserved resource, namely, the third reserved resource, for the first traffic on the first reserved resource, so that the first traffic can continue to be transmitted on the third reserved resource, to ensure that transmission of the first traffic can be completed.

In a possible implementation, the first indication information further indicates that the first traffic is allowed to contention-based access partial frequency domain resources in the at least one first reserved resource, and/or the first indication information further indicates that the partial frequency domain resources in the at least one first reserved resource are used to schedule or transmit the first traffic. Because the first AP occupies a wide channel, and resources reserved for the first traffic are all frequency domain resources of the channel, resource waste may be caused. In this solution, it is stipulated that the first traffic and remaining traffic may reuse a time domain resource of the reserved resource, and separately use a frequency domain resource of the reserved resource. This can improve resource utilization, and can also improve traffic transmission efficiency of an entire system. For example, when sending the downlink first traffic, the AP may simultaneously send other traffic in a same physical frame by using different RUs.

In a possible implementation, the management frame is a beacon (beacon) frame, an association response (association response) frame, a probe response (probe response) frame, or an action frame. A specific implementation of the management frame is not limited in this embodiment of this application, and is flexible.

In a possible implementation, the first indication information is carried in a first element field and/or a quiet element field included in the management frame. In this solution, the first indication information is carried in the quiet element field, and is applicable to a terminal prior to the 802.11be (which may also be referred to as a legacy terminal). The first indication information is carried in the first element field. The first element field may be a newly defined field, and is applicable to an 802.11be terminal or an 802.11be next-generation terminal (which may be collectively referred to as a non-legacy terminal). The first indication information is carried in the first element field and the quiet element field, and may be applicable to scenarios such as a terminal prior to the 802.11be and an 802.11be terminal.

In a possible implementation, there are N quiet element fields, and the N quiet element fields one-to-one correspond to N first reserved resources. In this solution, a corresponding quiet interval is set for the N first reserved resources reserved for the first traffic by using the quiet element field, so that the legacy terminal is quiet in the resource reserved for the first traffic, interference caused by the legacy terminal to the non-legacy terminal is avoided, and a low delay requirement for transmitting the first traffic by the non-legacy terminal is ensured.

In a possible implementation, the management frame includes a resource reservation element field and a quiet element field. If the first device is a legacy terminal, the first device performs quieting based on a quiet interval indicated by the quiet element field, or if the first device is a non-legacy terminal, the first device sets the at least one first reserved resource based on a quiet interval indicated by the quiet element field. The legacy terminal cannot identify the resource reservation element field. In this solution, the first indication information is carried in the resource reservation element field and the quiet element field. Therefore, the quiet element field may be set, so that the legacy terminal keeps quiet on the resource reserved for the traffic of the non-legacy terminal. In other words, a resource is reserved for the traffic of the non-legacy terminal by using one signal, and the legacy terminal is quiet on the reserved resource.

In a possible implementation, the first device is a second AP located in a same AP coordination group as the first AP. The first traffic includes traffic between the first AP and the second AP. In this case, a moment at which the first device sends a management frame is *T_{B}* + m × *Tᵣ,* where T_{B} is a sending moment at which the first AP sends the management frame, and m is an integer greater than or equal to 0; and/or a resource reservation period of a cell served by the first device is set to Tᵣ. This solution may be applicable to communication between APs. Any AP in the coordination group may adjust, based on the management frame sent by the first AP (a primary AP), namely, based on a resource reserved by the primary AP for the first traffic, a resource that can be reserved by the AP. In this way, reserved resources of the APs in the coordination group can be aligned, and the APs learn of a resource location to back off. This avoids mutual interference between the APs, and shortens a traffic transmission delay between the APs.

In a possible implementation, the method further includes: The first device sends a first request message to the first AP, where the first request message is used to request the first AP to reserve a resource for the first traffic of the first device. This solution can avoid resource waste caused by reserving a fixed resource for the first traffic.

In a possible implementation, when the first device determines that a status of the network for transmitting the first traffic meets a preset trigger condition, the first device sends the first request message to the first AP, where the preset trigger condition is that sending delays of a plurality of data packets exceed a preset threshold. This solution provides an occasion for the first device to apply for a reserved resource, namely, an occasion for the first device to apply for a reserved resource only when the status of the network is poor. This avoids applying for an unnecessary reserved resource.

For example, the plurality of data packets are L consecutive data packets. In this solution, the status of the network is determined based on sending delays of the L consecutive data packets. If the sending delays of the L consecutive data packets exceed the delay threshold, it indicates that the sending delay of each of the L data packets exceeds the delay requirement, and it may be considered that the status of the network is poor.

For example, the plurality of data packets are L consecutive data packets in P data packets. In this solution, the status of the network is determined based on sending delays of the L consecutive data packets in the P data packets. If the sending delays of the L consecutive data packets in the P data packets exceed the delay threshold, it indicates that sending delays of some data packets in the P data packets exceeds the delay threshold, and sending delays of some data packets do not exceed the delay threshold. It may be considered that the status of the network is unstable. On the whole, the status of the network is poor.

For example, exceeding the preset threshold further includes reaching K times the preset threshold. In this solution, the status of the network is determined based on a delay of sending data on a time-frequency resource. For example, it is assumed that the STA needs to send 10 data packets. After consecutively sending three data packets on a same time-frequency resource, due to a delay, the STA has no opportunity to send remaining data packets. In this case, it may also be considered that the status of the network is poor. Therefore, in this embodiment of this application, that the sending delay of the data packet exceeds the delay threshold may also be considered as that the sending delay of the data packet reaches K times the delay threshold.

According to a second aspect, a communication apparatus is provided. For example, the communication apparatus is the foregoing first device or an apparatus disposed in the first device. The communication apparatus may be configured to perform the method according to any one of the first aspect or the possible implementations of the first aspect. Specifically, the communication apparatus may include modules configured to perform the method according to any one of the first aspect or the possible implementations of the first aspect, for example, include a processing module and a transceiver module that are coupled to each other. For example, the communication apparatus is the foregoing first device.

The transceiver module is configured to receive a management frame from a first AP, where the management frame includes first indication information, the first indication information indicates at least one first reserved resource that first traffic is allowed to contention-based access, and the at least one first reserved resource includes only a time-frequency resource reserved for the first traffic.

The transceiver module is further configured to initiate channel access on the at least one first reserved resource determined by the processing module, and transmit the first traffic.

In a possible implementation, the at least one first reserved resource is some time-frequency resources between TBTTs. For example, the at least one first reserved resource may be a channel of an entire bandwidth, or may be some RUs of a channel.

In a possible implementation, the AP is an AP in an MLD AP. The first AP operates on a plurality of links. The first indication information indicates a time-frequency resource of one of the plurality of links, or the first indication information indicates some time-frequency resources of a first link of the plurality of links.

In a possible implementation, an interval *Tᵣ* between two adjacent first reserved resources is determined based on a delay requirement of the first traffic, and duration occupied by each first reserved resource is determined based on a traffic volume of the first traffic.

In a possible implementation, the management frame includes second indication information. The second indication information indicates at least one second reserved resource that second traffic is allowed to contention-based access. The at least one second reserved resource includes only a time-frequency resource reserved for the second traffic. The at least one second reserved resource does not overlap the at least one first reserved resource.

In a possible implementation, *Tᵣ* satisfies *T*ᵣ ≤ *t_{delay}*/2*,* where *t_{delay}* is a maximum delay allowed by the first traffic.

In a possible implementation, the transceiver module is further configured to receive an action (action) frame from the first AP, where the action frame indicates a third reserved resource and indicates the first device to continue the first traffic on the third reserved resource, a start moment of the third reserved resource is later than an end moment of a first reserved resource in the at least one first reserved resource, the action frame is sent before the end moment of the first reserved resource, and transmission duration of the traffic volume of the first traffic is greater than duration occupied by the first reserved resource.

In a possible implementation, the first indication information further indicates that the first traffic is allowed to contention-based access partial frequency domain resources in the at least one first reserved resource, and/or the first indication information further indicates that the partial frequency domain resources in the at least one first reserved resource are used to schedule or transmit the first traffic.

In a possible implementation, the management frame is a beacon frame, an association response frame, a probe response frame, or an action frame.

In a possible implementation, the first indication information is carried in a first element field and/or a quiet element field included in the management frame.

In a possible implementation, there are N quiet element fields, and the N quiet element fields one-to-one correspond to N first reserved resources.

In a possible implementation, the management frame includes a resource reservation element field and a quiet element field. If the communication apparatus is a legacy terminal, the processing module is configured to perform quieting based on a quiet interval indicated by the quiet element field, or if the communication apparatus is a non-legacy terminal, the processing module is configured to set the at least one first reserved resource based on a quiet interval indicated by the quiet element field.

In a possible implementation, the communication apparatus is a second AP located in a same AP coordination group as the first AP. The first traffic includes traffic between the first AP and the second AP. The processing module is further configured to determine that a moment at which the communication apparatus sends a management frame is *T_{B}* + m × *Tᵣ,* where T_{B} is a moment at which the first AP sends the management frame, and m is an integer greater than or equal to 0; and/or
the processing module is further configured to determine that a resource reservation period of a cell served by the communication apparatus is set to Tᵣ.

In a possible implementation, the transceiver module is further configured to send, by the first device, a first request message to the first AP, where the first request message is used to request the first AP to reserve a resource for the first traffic of the communication apparatus.

In a possible implementation, when the processing module determines that a status of a network for transmitting the first traffic meets a preset trigger condition, the transceiver module sends the first request message to the first AP, where the preset trigger condition is that sending delays of a plurality of data packets exceed a preset threshold.

For example, the plurality of data packets are L consecutive data packets.

For example, the plurality of data packets are L consecutive data packets in P data packets.

For example, exceeding the preset threshold further includes reaching K times the preset threshold.

For technical effects brought by the second aspect or the possible implementations of the third aspect, refer to the descriptions of the technical effects of the first aspect or the possible implementations of the first aspect.

According to a third aspect, an embodiment of this application provides a communication apparatus. The communication apparatus may be the communication apparatus in the second aspect in embodiments, or a chip disposed in the communication apparatus in the second aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first device in the method embodiment in the first aspect.

It should be understood that the communication interface may be implemented by using an antenna, a feeder, a codec, and the like in the communication apparatus. Alternatively, if the communication apparatus is a chip disposed in the first AP, the communication interface may be an input/output interface of the chip, for example, an input/output pin. The communication apparatus may further include a transceiver, configured to perform communication between the communication apparatus and another device. For example, when the communication apparatus is the first device, the another device is the first AP; or when the communication apparatus is the first AP, the another device is the first device.

According to a fourth aspect, this application provides a computer-readable storage medium. The computer-readable storage medium stores a computer program. When the computer program is run, the method performed by the first device in the foregoing aspects is implemented.

For beneficial effects of the third aspect and the fourth aspect and the implementations of the third aspect and the fourth aspect, refer to the descriptions of beneficial effects of the method in the first aspect and the implementations of the first aspect.

### BRIEF DESCRIPTION OF DRAWINGS

FIG. 1 is a diagram of a network architecture of a WLAN to which an embodiment of this application is applicable;
FIG. 2 is a diagram of a network architecture applicable to a multi-link communication AP;
FIG. 3 is a schematic diagram of a relationship between a contention window of a WLAN in a CSMA/CA mechanism and retransmissions;
FIG. 4 is a schematic diagram of P2P communication based on quiet time period protection according to an embodiment of this application;
FIG. 5 is a schematic diagram of separately allocating channels to different users according to an embodiment of this application;
FIG. 6 is a schematic flowchart of a channel access method according to an embodiment of this application;
FIG. 7 is a schematic diagram of a resource reserved for one type of traffic according to an embodiment of this application;
FIG. 8 is a schematic diagram of resources reserved for two types of traffic according to an embodiment of this application;
FIG. 9 is a schematic diagram of an interval between two adjacent reserved resources reserved for traffic according to an embodiment of this application;
FIG. 10 is a schematic diagram of an interval of triggering a temporarily reserved resource for traffic according to an embodiment of this application;
FIG. 11 is a schematic diagram of a format of a resource reservation element according to an embodiment of this application;
FIG. 12 is a schematic diagram of a format of a periodic resource reservation element according to an embodiment of this application;
FIG. 13 is a schematic diagram of a format of a short-term resource reservation element according to an embodiment of this application;
FIG. 14 is a schematic diagram of a format of a temporary resource reservation setup field according to an embodiment of this application;
FIG. 15 is a schematic diagram of a format of a resource reservation release field according to an embodiment of this application;
FIG. 16 is a diagram of a network architecture of an AP coordination group according to an embodiment of this application;
FIG. 17 is a diagram of a network architecture of another AP coordination group according to an embodiment of this application;
FIG. 18 is a schematic diagram of communication of an AP coordination group based on quiet time period protection according to an embodiment of this application;
FIG. 19 is a diagram of a network architecture of communication between an AP and a STA according to an embodiment of this application;
FIG. 20 is a flowchart of triggering, by a STA, resource reservation for uplink low-delay traffic according to an embodiment of this application;
FIG. 21 is a flowchart of triggering, by an AP, resource reservation for downlink low-delay traffic according to an embodiment of this application;
FIG. 22 is a schematic diagram of a structure of an existing quiet element in the existing 802.11 standard;
FIG. 23 is a schematic diagram of implementing resource reservation by using a quiet element field and a resource reservation element field according to an embodiment of this application;
FIG. 24 is a schematic diagram of a format of a temporary resource reservation setup element according to an embodiment of this application;
FIG. 25 is a schematic diagram of a structure of a communication apparatus according to an embodiment of this application; and
FIG. 26 is a schematic diagram of another structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Embodiments of this application may be applicable to a wireless local area network (wireless local area network, WLAN) scenario, and may be applicable to an IEEE 802.11 system standard, for example, the 802.11a/b/g standard, the 802.11n standard, the 802.11ac standard, the 802.11ax standard, or a next-generation standard, for example, the 802.11be standard or a further next-generation standard. Alternatively, embodiments of this application may be applied to a wireless local area network system, for example, an internet of things (internet of things, IoT) network or a vehicle-to-everything (Vehicle to X, V2X) network. Certainly, embodiments of this application may be further applied to another possible communication system, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a future 5G communication system.

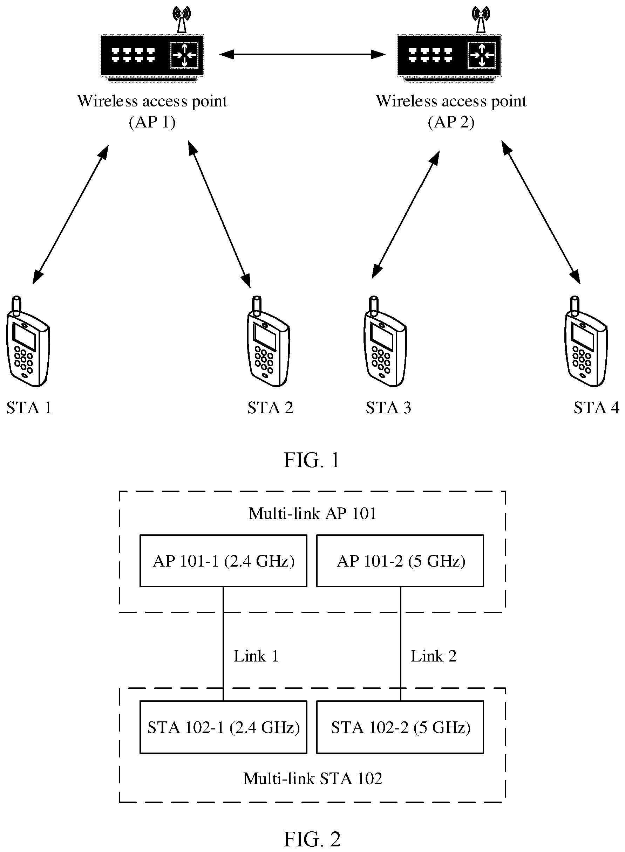

For example, FIG. 1 is a diagram of a network architecture of a WLAN to which an embodiment of this application is applicable. In FIG. 1, for example, the WLAN includes two wireless access points (access point, AP) (which are respectively an AP 1 and an AP 2). The AP 1 and the AP 2 may each be associated with one or more stations (station, STA). As shown in FIG. 1, for example, the AP 1 and the AP 2 are each associated with two STAs. For example, the STAs associated with the AP 1 include a STA 1 and a STA 2, and the STAs associated with the AP 2 include a STA 3 and a STA 4. Any AP may schedule a radio resource for an associated STA and/or an unassociated STA, and transmit data for the STA on the scheduled radio resource. For example, the AP 1 may schedule a radio resource for the STA 1 and the STA 2, and transmit data, including uplink data information and/or downlink data information, for the STA 1 and the STA 2 on the scheduled radio resource. The AP 2 may schedule a radio resource for the STA 3 and the STA 4, and transmit data, including uplink data information and/or downlink data information, for the STA 3 and the STA 4 on the scheduled radio resource. In addition, this embodiment of this application may be applicable to communication between APs. For example, the APs may communicate with each other through a possible data link. This embodiment of this application is also applicable to communication between STAs. In addition, the AP and the STA in this embodiment of this application may be a wireless communication device that supports concurrent transmission on a plurality of links, for example, are referred to as a multi-link device (Multi-link device, MLD) or a multi-band device (multi-band device, MBD), and have higher transmission efficiency and a higher throughput. In this specification, an AP supporting communication on a plurality of links may be referred to as an MLD AP, and a STA supporting communication on a plurality of links, namely, a multi-link STA, may be referred to as a non-access point station (non-Access Point Station, non-AP STA). It should be understood that quantities of APs and STAs in FIG. 1 are merely examples, and may be more or less.

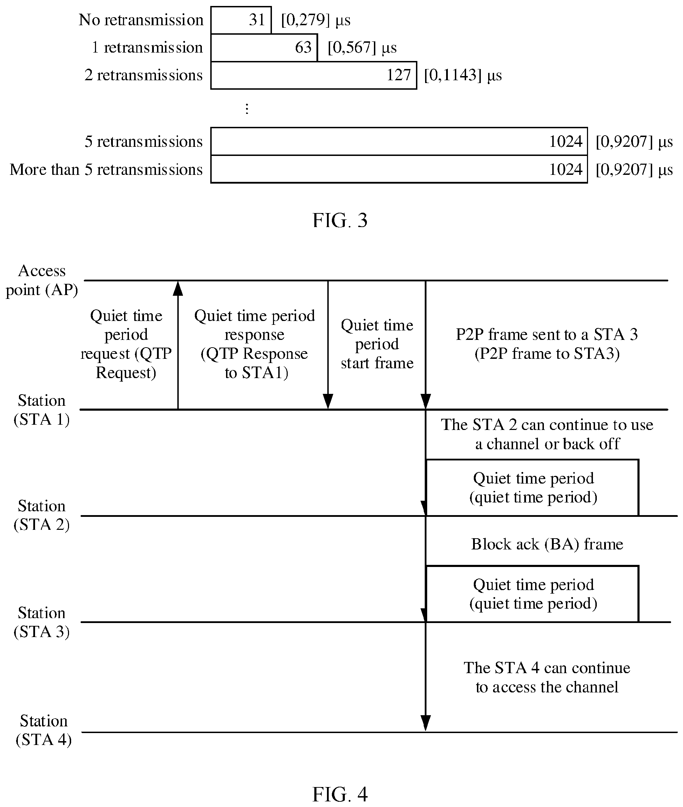

FIG. 2 is a diagram of a network architecture of multi-link communication according to an embodiment of this application. In a wireless local area network, a multi-link device communicates with another device on a plurality of links. FIG. 3 is a schematic diagram of communication between a multi-link AP device 101 and a multi-link STA device 102. The multi-link AP device 101 includes an affiliated AP 101-1 and an affiliated AP 101-2. The multi-link STA device 102 includes an affiliated STA 102-1 and an affiliated STA 102-2. The multi-link AP device 101 and the multi-link STA device 102 concurrently communicate on a link 1 and a link 2.

The multi-link device in the embodiments of this application may be a single-antenna device, or may be a multi-antenna device, For example, the multi-link device may be a device with more than two antennas. A number of antennas included in the multi-link device is not limited in this embodiment of this application. In this embodiment of this application, the multi-link device may allow traffic of a same access type to be transmitted on different links, or even allow same data packets to be transmitted on different links. Alternatively, the multi-link device may not allow traffic of a same access type to be transmitted on different links, but may allow traffic of different access types to be transmitted on different links. The multi-link device may operate on a frequency band of sub 1 GHz, 2.4 GHz, 5 GHz, 6 GHz, and high-frequency 60 GHz.

The STA in this embodiment of this application may be a user terminal, a user apparatus, an access apparatus, a subscriber station, a subscriber unit, a mobile station, a user agent, a user device, or another device that has a wireless communication function. The user terminal may be a device having a wireless communication function, for example, a handheld device, a vehicle-mounted device, a wearable device, a computing device, and another processing device connected to a wireless modem. The user terminal may alternatively be user equipment (user equipment, UE), a mobile station (mobile station, MS), a terminal (terminal), terminal equipment (terminal equipment), a portable communication device, a handheld device, a portable computing device, an entertainment device, a game device or system, a global positioning system device, or any other suitable device in various forms configured to perform network communication via wireless media. For example, the STA may be a router, a switch, a bridge, or the like. Herein, for ease of description, the devices mentioned above are collectively referred to as a station or a STA.

The AP in this embodiment of this application is an apparatus that is deployed in a wireless communication network and that provides a wireless communication function for a STA associated with the AP. The AP may be used as a hub of the communication system, and may be a communication device such as a base station, a router, a gateway, a repeater, a communication server, a switch, or a bridge. The base station may include various forms of macro base stations, micro base stations, relay stations, and the like. Herein, for ease of description, the devices mentioned above are collectively referred to as an AP.

A WLAN operates on an unlicensed frequency band. In other words, any device that meets radio specifications may send or receive data on this frequency band. However, there are a plurality of devices in the WLAN. If the plurality of devices use a same channel to send data in a same time period, a collision is obviously caused, and the plurality of devices fail to send data. To reduce a collision between devices in the WLAN, it is stipulated that all the devices in the WLAN may perform communication by using a carrier sense multiple access with collision avoidance (carrier sense multiple access with collision avoidance, CSMA/CA) mechanism. To be specific, before sending data, all the devices in the WLAN may actively initiate a channel access procedure, and then may monitor a channel state by using the CSMA/CA mechanism, and determine whether the channel is idle. The channel is used to send data only when the channel is idle. If the channel is not idle, it indicates that the channel is being used by another device, and the channel is not used to send data.

Specifically, when a device in the WLAN detects that a channel is in an idle state, the device does not immediately send data, but starts to send data after a time period. For example, after channel idle time exceeds a distributed inter-frame space (distributed inter-frame space, DIFS), the device may randomly select a value (which may be briefly referred to as a random number) from a contention window (contention window, CW), namely, [0, CW]. The random number is decreased by 1 at an interval of one slot time (slot time) of the channel idle time. When the random number is decreased to 0, the device starts to send data. Possible values of the CW include 31, 63, 127, 255, 511, and 1023. Corresponding backoff times are respectively 279 microseconds, 567 microseconds, 1143 microseconds, 2295 microseconds, 4599 microseconds, and 9207 microseconds.

However, when there are a large quantity of users in the WLAN, a plurality of users may simultaneously initiate a CSMA/CA-based channel access procedure, and a collision may still occur. For example, if the plurality of users simultaneously detect that a channel is idle, and the plurality of users select a same random number from the contention window, the plurality of users select to send data at a same moment. Apparently, a collision causes a data sending failure. In this case, if any one of the plurality of users determines a data sending failure, it may be considered that the user collides with another user, and the user may choose to increase a maximum value in the CW, so that a probability of a collision during next channel access is reduced. For example, FIG. 3 is a schematic diagram of a relationship between a contention window of a WLAN in a CSMA/CA mechanism and retransmissions. For example, when there is no retransmission, namely, before the user starts to send data, a random number selected from the CW may be 31. When the user fails to send data for the first time, the user may increase the maximum value in the CW. In other words, the user may enlarge the CW. For example, the maximum value in the CW may be increased to 63. In this case, a range of the random number selected by the user from the CW is large, and the probability of the collision during next channel access may be reduced. It should be understood that, if a data sending failure still occurs after the user enlarges the contention window, namely, if a retransmission is needed, the user may continue to enlarge the CW, for example, increase the maximum value in the CW to 127. By analogy, if the user fails five or more retransmissions, the maximum value of the CW may be increased to 1023.

It should be understood that, when there are more users in the WLAN, a collision probability is higher. Correspondingly, it may be learned from FIG. 3 that a larger average CW indicates longer time for a user to access a channel. Especially in an office or home indoor environment, there is usually more than one WLAN, and there is a contention relationship between intra-frequency WLANs,. This causes a longer channel access delay to a user. When each user in the WLAN contends for a channel, each user randomly selects a random number from the CW, and the user may further adjust the range of the CW. Therefore, a delay for each user to access a channel for sending data is random. In other words, the delay is undetermined. In other words, channel access delays of data packets sent by each user in the WLAN in a WLAN air interface show long-tail distribution. Generally, access delays of most data packets are less than an average delay, and access delays of a few data packets are very long. For traffic that requires a low delay, a delay of the data packet cannot satisfy traffic that has a higher delay requirement. This causes an unstable traffic delay, and poor user experience.

To provide better quality of service (quality of service, QoS) assurance for traffic (which may be referred to as high-priority traffic in this application) having a higher delay requirement, the IEEE 802.11 introduces an EDCA contention queue. The EDCA desreases a possible value of the maximum value in the CW. For example, the maximum value of the CW may be 7 or 15. In other words, the EDCA narrows a range of a maximum value and a minimum value of the CW. This can increase a probability for high-priority traffic to contend for a channel, and shortens a delay of the high-priority traffic. For example, the value range of the CW for a highest-priority voice queue may be defined as [7, 15]. The value range of the CW for a second-highest-priority video queue may be defined as [15, 31]. Although EDCA can increase the probability of the high-priority traffic to access the channel and shorten the delay of the high-priority traffic, contention and collisions of the high-priority traffic still exist. In addition, the decrease of the CW causes more frequent collisions of the high-priority traffic. Specifically, with the emergence of more and more types of high-priority traffic, for example, in the IEEE 802.11 real-time application (real-time application, RTA) interest group, multiple low-delay scenarios such as real-time online gaming, real-time video, industrial wireless, and unmanned aerial vehicle control are defined. The delay requirement range of these traffic is 1 ms to 100 ms, which is far beyond the delay requirement (300 ms) of the highest-priority traffic voice in the EDCA mechanism. The EDCA mechanism is still used, and the collision between high-priority traffic is more severe.

Therefore, a method for reducing a collision at a granularity of a single transmission is proposed in the 802.11ax. For example, a method for reducing point-to-point communication collisions is proposed. The point-to-point communication herein refers to communication between a plurality of terminals without an AP or a central control node, for example, point-to-point (point to point, P2P) communication, and also includes ad hoc communication. Compared with P2P communication, a network including an AP or a central control node may be denoted as an AP-STA network (communication) in this specification. When both the AP-STA network and the P2P network exist, some terminals are in the two networks, and are referred to as P2P terminals. The other terminals are in the AP-STA network, and are referred to as non-P2P terminals. When a P2P terminal notifies a non-P2P terminal in the AP-STA network that P2P communication may exist in a future period of time, the non-P2P terminal may choose to back off a channel used for point-to-point transmission. This can shorten a channel access delay of the P2P terminal in point-to-point communication. The following describes an example of point-to-point communication (P2P communication). Regardless of the P2P network or the AP-STA network, the terminal is a terminal (which may be briefly referred to as an HE terminal, namely, a Wi-Fi 6 device or an 802.11be terminal) in the 802.11ax standard. Similarly, an AP in the 802.11ax standard may also be referred to as an HE AP. In contrast, a terminal prior to the 802.11ax standard may be referred to as a legacy (legacy) terminal.

Because the non-P2P terminal cannot understand P2P scheduling information, interference may exist between two different systems (namely, the point-to-point network and the AP-STA network). It is stipulated in the 802.11ax that before initiating P2P communication, a terminal may send a quiet time period (quiet time period, QTP) request (request) to an HE AP. After receiving the request, the HE AP may send a quiet time period setup (quiet time period setup) frame to all other terminals. An HE terminal that receives the frame may choose to back off in a subsequent time period, to avoid a collision in P2P communication.

For ease of understanding, FIG. 4 is a schematic diagram of P2P communication based on quiet time period protection according to an embodiment of this application. For example, FIG. 4 shows four STAs: a STA 1, a STA 2, a STA 3, and a STA 4. The STA 1, the STA 2, and the STA 3 are all HE terminals. The STA 1 and the STA 3 are located in a P2P network, the STA 2 is not located in the P2P network, and the STA 4 is a legacy terminal.

It may be learned from FIG. 4 that before initiating P2P communication, the STA 1 sends a quiet time period request to an AP. After receiving the quiet time period request, the AP sends a quiet time period response message, namely, a QTP response, to the STA 1. In addition, the AP sends a quiet time period setup (QTP setup) frame to all terminals (the STA 1 to the STA 4). Because the STA 1 requests to perform P2P communication with the STA 3, the STA 1 receives the QTP response and the QTP setup frame, and may send a P2P frame to the STA 3. After receiving the P2P frame, the STA 3 may send a block acknowledgment (block acknowledgment, BA) frame to the STA 1 in a quiet time period.

The STA 2 receives the QTP setup frame and may learn that P2P traffic exists in the QTP. The STA 2 may choose to back off in the QTP, and release a channel. Certainly, the STA 2 may alternatively choose to continue to use the channel. In other words, the STA 2 determines whether to continue to use the channel, and the AP does not force the STA 2 to release the channel in the QTP. For example, if traffic to be transmitted by the STA 2 has a low delay requirement, the STA 2 may choose to be quiet in the QTP, and actively release the channel. This can avoid an energy consumption increase of the STA 2 caused when the STA 2 may retransmit traffic due to a collision. However, if the STA 2 actively backs off, the STA has a long channel access delay. Therefore, in most cases, the STA 2 does not choose to actively back off. In this way, the STA 2 may still contend for the channel with the SAT 1 or the STA 3, and still causes a collision in P2P communication.

The STA 4 receives the QTP setup frame. Because the STA 4 is a legacy terminal, the STA 4 cannot identify the QTP setup frame. Therefore, the STA 4 still continues to access the channel even in the QTP, and is still likely to cause a collision in P2P communication.

In addition, in the method shown in FIG. 4, the terminal can send a QTP request only after accessing a channel based on a CSMA mechanism, and the terminal needs to send a QTP request, namely, a temporary QTP request, each time initiating P2P communication. Therefore, if network quality is poor, there is still a delay when the QTP request is sent. For P2P traffic, a delay still cannot be determined.

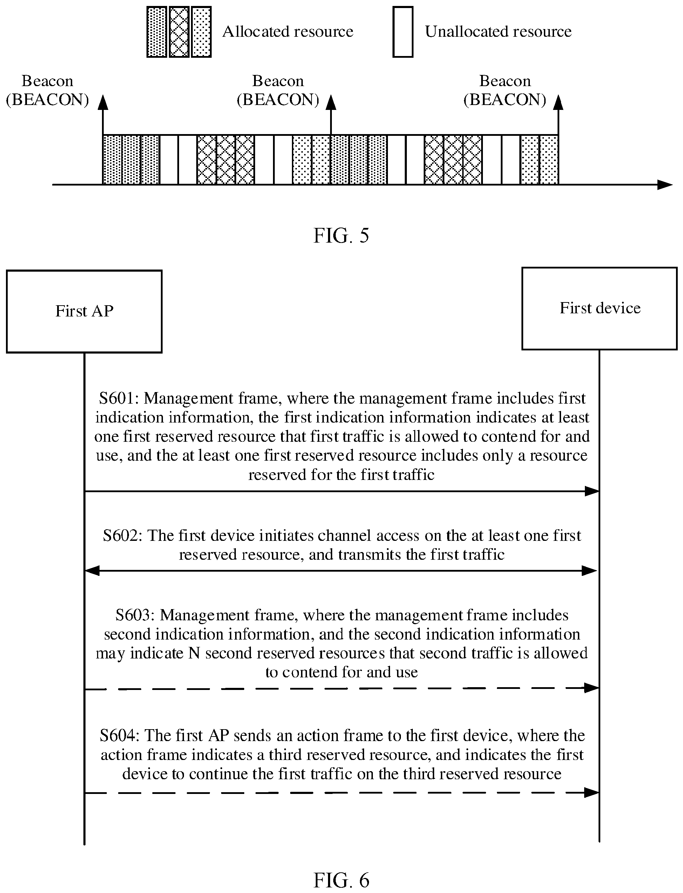

Therefore, a technical solution in which a channel is divided into slots of different granularities at a granularity of user priorities, and some slots are allocated to specific users based on the user priorities is proposed. As shown in FIG. 5, a channel may be divided into 12 slots, where slots in different shadow parts are allocated to different users. This method can distinguish user priorities, so that some users have more opportunities to access a channel than other users. For example, for a slot specified for a specific user, only the specific user is allowed to access the channel, and for a slot not specified for a user, all users may contend. In this way, it can be ensured that a high-priority user obtains more opportunities to access a channel, and a traffic transmission delay of the high-priority user is shortened.

However, this requires synchronization between users so that a user can learn which slot to start backoff. However, the WLAN is an asynchronous network, and it is difficult to maintain slot synchronization between devices. In addition, this method allocates slots based on user priorities. This is unfair to traffic. For example, a user has both high-priority traffic and low-priority traffic. If the user is set to a high priority, low-priority traffic of the user has more opportunities than high-priority traffic of other users. This is unfair to the high-priority traffic of other users.

In view of this, an embodiment of this application provides a channel access method. In the method, an AP may reserve, for traffic (for example, first traffic), a time-frequency resource for contention and use. In other words, only the first traffic is allowed to contention-based access the time-frequency resource, and traffic other than the first traffic is quiet on the time-frequency resource. Because only the first traffic is allowed to contention-based access the reserved time-frequency resource, an opportunity for the first traffic to access a channel may be increased, and a transmission delay of the first traffic is shortened.

With reference to the accompanying drawings, the following describes the technical solutions provided in embodiments of this application.

FIG. 6 is a schematic flowchart of a channel access method according to an embodiment of this application. The following describes an example in which the method provided in this embodiment of this application is applied to the application scenario shown in FIG. 1. For example, the method provided in this embodiment of this application may be applicable to communication between APs, or may be applicable to communication between an AP and a STA. Certainly, this embodiment of this application may also be applied to another possible communication scenario or communication system. A traffic transmission delay may be shortened by using the method provided in this embodiment of this application in all scenarios having a high traffic delay requirement. In addition, the method may be performed by two communication apparatuses. The two communication apparatuses are, for example, a first access point (denoted as an AP 1 below) and a first device. It should be understood that, if this embodiment of this application is applied to communication between APs, the first device is an AP, for example, may be a second AP (denoted as an AP 2 below). If this embodiment of this application is applied to communication between an AP and a STA, the first device is a STA.

Specifically, a procedure of the channel access method according to this embodiment of this application is described as follows.

S601: The first AP sends a management frame to the first device, and the first device receives the management frame, where the management frame includes first indication information, the first indication information indicates at least one first reserved resource that first traffic is allowed to contention-based access, and the at least one first reserved resource includes only a resource reserved for the first traffic.

S602: The first device initiates channel access on the at least one first reserved resource, and transmits the first traffic.

This embodiment of this application is intended to shorten a transmission delay of traffic having a high delay requirement. In this specification, the traffic having a high delay requirement is collectively referred to as the first traffic. In other words, the first traffic in this specification is a type of traffic, and this type of traffic has a high requirement on a transmission delay. For example, the first traffic may be online game traffic, real-time video traffic, industrial wireless traffic, or unmanned aerial vehicle control traffic.

In this embodiment of this application, the first AP may reserve, for the first traffic, a time-frequency resource for contention and use, for example, N first reserved resources, where N is an integer greater than or equal to 1. Because the N first reserved resources are reserved for the first traffic, it may be considered that the N first reserved resources include only the resource reserved for the first traffic. In this case, traffic other than the first traffic does not contention-based access the N first reserved resources. In other words, the traffic other than the first traffic is quiet on the N first reserved resources. The traffic other than the first traffic does not contend with the first traffic for the N first reserved resources. Therefore, an opportunity for the first traffic to access a channel may be increased. Further, each time after accessing a channel, the first device may continue to send or schedule the first traffic on the N first reserved resources, so that a transmission delay of the first traffic is further shortened. In addition, even when network congestion occurs, because the N first reserved resources are reserved for the first traffic, namely, because the first traffic may use the N first reserved resources prior to other traffic, a delay requirement of low-delay traffic can still be met. In addition, in this embodiment of this application, a resource is reserved for the first traffic (namely, specific traffic). In other words, a resource is reserved at a granularity of traffic. Compared with a case of reserving a resource at a granularity of a user, this case can avoid that common traffic obtains an improper priority because the user has both common traffic and specific traffic.

In a current WLAN protocol, the AP cannot distinguish between low-delay traffic and common traffic. Therefore, the first AP does not learn that the first traffic to be transmitted by the first device is low-delay traffic that is different from common traffic, or the first AP does not learn that a delay priority of the first traffic is higher than that of other traffic. Therefore, in consideration of fairness for various types of traffic, the first AP does not actively reserve a resource for the first traffic. When the first device needs to transmit the first traffic, the first device may request the AP to reserve the N first reserved resources for the first traffic. For example, the first device may send a first request message to the first AP, where the first request message may be used to request the first AP to reserve a resource for the first traffic.

Certainly, the first device may alternatively notify the first AP that the first traffic is low-delay traffic, namely, traffic for which a resource needs to be reserved. In this way, when the first AP determines that the traffic to be transmitted by the first device is the first traffic, the first AP may actively reserve the N first reserved resources for the first traffic. Alternatively, the first AP determines that a resource needs to be reserved for the first traffic, and may actively reserve the N first reserved resources for the first traffic.

In an example, one or more low-delay traffic queues may be newly defined, and a low delay in the low-delay traffic queue has a higher channel access priority. For example, one or more low-delay traffic queues may be newly defined in addition to existing four EDCA contention queues. The first device may notify the first AP of the low-delay traffic queue, or a protocol may predefine the low-delay traffic queue. If the first AP determines that the traffic to be transmitted by the first device is the first traffic, and the first traffic is in the low-delay traffic queue, the first AP considers that a resource needs to be reserved for the first traffic, and the first AP may also actively reserve N first reserved resources for the first traffic.

In another example, the first device may send a traffic identifier of the first traffic to the first AP, to notify the first AP that the traffic to be transmitted is low-delay traffic. For example, the traffic identifier may be a traffic stream identifier (traffic stream identifier, TSID). Correspondingly, when reserving a resource for the first traffic, the first AP may indicate, by using a specified TSID, that the reserved resource belongs to the first traffic, and in other words, only traffic corresponding to the TSID is allowed to access a channel.

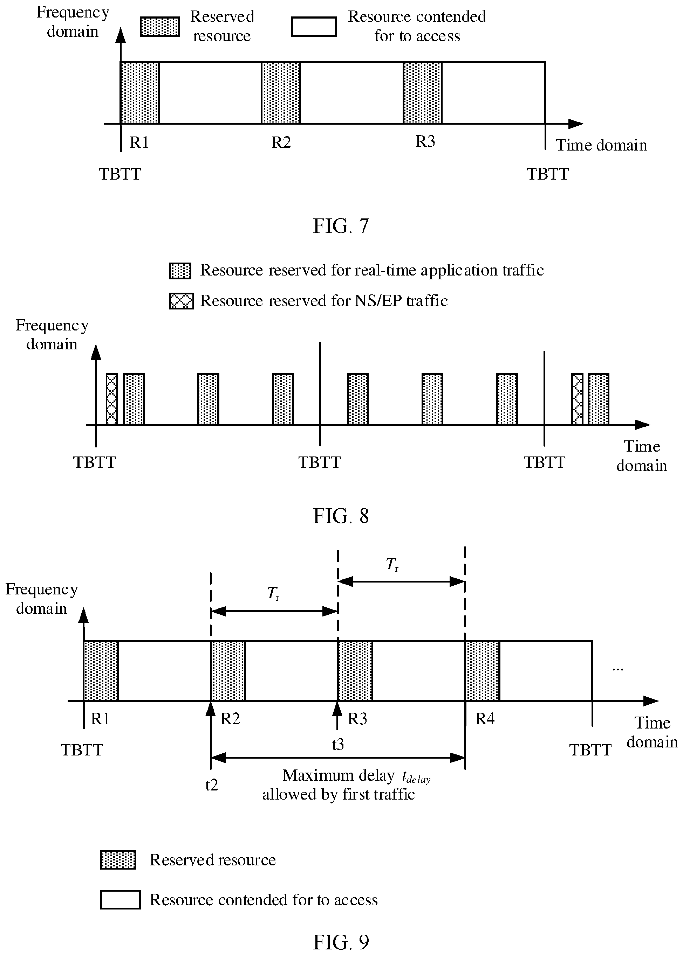

In some embodiments, the N first reserved resources may be some time-frequency resources between TBTTs. It should be noted that the TBTT herein may be considered as a time interval at which the first AP continuously sends a management frame twice. For example, the TBTT may be a time interval at which two beacon (Beacon) frames are consecutively sent, or the TBTT may be a time interval at which two association response (association response) frames, two probe response (probe response) frames, or the like are consecutively sent. The N first reserved resources may be aperiodic resources, or may be periodic resources, as shown in FIG. 7. This is not limited in this embodiment of this application. The following uses an example in which the N first reserved resources are periodic resources.

In an example, the N first reserved resources may be one channel reserved in a plurality of channels between the TBTTs, or some RUs reserved on one channel. In another example, if the first AP has a dual-link function, namely, if the first AP is an AP in an MLD AP, and the first AP operates on a plurality of links, the N first reserved resources may be frequency domain resources of all of the plurality of links, for example, the link 1 and the link 2 in FIG. 2. Alternatively, the N first reserved resources may be a frequency domain resource of one of the plurality of links, for example, the link 1 or the link 2 in FIG. 2. Alternatively, the N first reserved resources may be partial frequency domain resources of one of the plurality of links, for example, partial frequency domain resources of the link 1 or the link 2 in FIG. 2.

In another example, the N first reserved resources may be a time domain resource corresponding to an entire spectrum between the TBTTs, or may be a time domain resource corresponding to a channel, or may be a time domain resource corresponding to some RUs on a channel.

Specifically, the N first reserved resources may be determined based on a delay requirement of the first traffic and a traffic volume of the first traffic. It should be understood that if different traffic has different traffic volumes, duration required for transmitting different traffic is also different. If each of the N first reserved resources occupies a small quantity of resources, it cannot be ensured that, for example, the first traffic is transmitted on the reserved resource, and proper transmission of the first traffic cannot be ensured. Consequently, user experience is poor. In addition, if an interval (denoted as *Tᵣ* in this specification) between two adjacent first reserved resources in the plurality of first reserved resources is long, because the first traffic contends for and use the N reserved resources, the delay requirement of the first traffic may not be met. For example, the first traffic requires a low delay. If the interval *Tᵣ* between two adjacent first reserved resources is long, the first traffic is transmitted on a current first reserved resource at a long interval after transmission is completed on a previous first reserved resource. This causes a long delay.

Therefore, in this embodiment of this application, the interval *Tᵣ* between two adjacent first reserved resources may be determined based on the delay requirement of the first traffic, and duration occupied by each reserved resource, namely, duration of each reserved resource, is determined based on the traffic volume of the first traffic. Because the N first reserved resources are determined based on an actual delay requirement and an actual traffic volume of the first traffic, the N first reserved resources can meet the delay requirement of the first traffic, and also ensure proper transmission of the first traffic.

Further, the first traffic is allowed to contention-based access the N first reserved resources. In other words, in this embodiment of this application, the resource reserved for the traffic is limited to be used in a contention manner. If there are a plurality of traffic, a probability of concurrent transmission of the plurality of traffic may be high or low. If the first AP considers, by default, that the probability of concurrent transmission of the plurality of traffic is high, certainly a large quantity of resources are reserved for the plurality of traffic. However, actually because the probability of concurrent transmission of the plurality of traffic is low, if resources are reserved for the traffic based on the high probability of concurrent transmission of the plurality of traffic, resource waste is obviously caused. In this case, in this embodiment of this application, the first AP may determine, based on a probability of concurrent transmission of specific traffic (for example, the first traffic) of different users, the N first reserved resources reserved for the first traffic. For example, if a probability of concurrent transmission of the first traffic of 10 users is 20%, the first AP may reserve 2N first reserved resources for the first traffic. Compared with reserving 10N first reserved resources, resource consumption can be obviously reduced.

In some embodiments, the first AP may alternatively reserve different time-frequency resources for different traffic. For example, the first AP may reserve M second reserved resources for second traffic. The M second reserved resources are similar to the N first reserved resources. For example, the M second reserved resources may be periodic resources, or may be aperiodic resources. The M second reserved resources may be one or more channels of a full bandwidth, or may be some RUs on a channel. Alternatively, if the first AP is an AP in an MLD AP, and the first AP operates on a plurality of links, the M second reserved resources may be time-frequency resources of all of the plurality of links, or may be a time-frequency resource of one of the plurality of links, or the M second reserved resources may be some time-frequency resources of one of the plurality of links. Duration occupied by each of the M second reserved resources may be the same as or different from duration occupied by each first reserved resource. An interval between two adjacent second reserved resources may be the same as or different from an interval between two adjacent first reserved resources. Specifically, the duration occupied by each of the M second reserved resources may be determined based on a traffic volume of the second traffic, and the interval between two adjacent second reserved resources may be determined based on a delay requirement of the second traffic.

In an example, still refer to FIG. 6. S603: The first AP may send second indication information to the first device, where the second indication information may indicate the M second reserved resources that the second traffic is allowed to contention-based access. It should be noted that, S603 is not mandatory, and therefore is illustrated by using a dashed line in FIG. 6. In addition, S603 may be performed before S601 or S602, or may be performed after S601 or S602.

It should be understood that the M second reserved resources include only a time-frequency resource reserved for the second traffic, and the M second reserved resources do not overlap the N first reserved resources, as shown in FIG. 8. FIG. 8 shows an example in which the first traffic is a national security/emergency preparedness (national security/emergency preparedness, NS/EP) traffic and the second traffic is real-time application traffic.

In some embodiments, the second indication information and the first indication information may be sent together. In other words, the second indication information and the first indication information are carried in a same management frame. In some other embodiments, the second indication information and the first indication information may be separately sent. In other words, the second indication information is carried in one management frame, and the first indication information is carried in another management frame. This is not limited in this embodiment of this application.

It should be understood that if the traffic is burst traffic, namely, non-periodic traffic, and a resource reserved for the traffic is a periodic resource, a large quantity of reserved resources cause resource waste. However, if a small quantity of resources are reserved for the traffic, for example, an interval between two adjacent resources is long, a delay requirement of the traffic may not be met. Therefore, in this embodiment of this application, when reserving a resource for the first traffic, the first AP may select a required resource corresponding to an average traffic volume of the first traffic or an average traffic volume multiplied by m, where m is a real number greater than 0. In addition, the first AP may determine, based on a maximum delay allowed by the traffic, an interval between two adjacent resources reserved for the traffic.

For example, the N first reserved resources are reserved for the first traffic. The interval *Tᵣ* between two adjacent first reserved resources satisfies *T*ᵣ ≤ *t_{delay}*/2, where *t_{delay}* is a maximum delay (delay upperbound) allowed for the first traffic, as shown in FIG. 9. R1 to R4 are the N first reserved resources, and a maximum delay *t_{delay}* allowed by the first traffic is from a start moment t2 of R2 to a start moment of R4. Optionally, in this embodiment of this application, an interval *T*ᵣ ≤ *t_{delay}*/2 between a start moment t2 of R2 and a start moment t3 of R3 meets a requirement of low-delay traffic as much as possible. Even if the quantity of the N first reserved resources is small, for aperiodic traffic, a delay requirement of the aperiodic traffic can be ensured. In this way, a large quantity of reserved resources do not need to be reserved for the first traffic, and resource waste can also be avoided.

Further, because a burst may occur in the first traffic, for example, the first traffic has other interference on the first reserved resource, the first traffic cannot be transmitted in duration occupied by the first reserved resource. Therefore, in this embodiment of this application, the first AP may trigger the temporarily reserved resource, for example, the third reserved resource, for the first traffic. The first traffic may continue to be transmitted on the third reserved resource, to ensure that the first traffic can be transmitted. It should be understood that a start moment of the third reserved resource is later than an end moment of a first reserved resource in the N first reserved resources.

In an example, still refer to FIG. 6. S604: The first AP sends an action frame to the first device, where the action frame indicates the third reserved resource, and indicates the first device to continue the first traffic on the third reserved resource. It should be noted that the first AP triggers the temporarily reserved resource only when the first traffic is not transmitted on the first reserved resource. Therefore, S504 is not mandatory, and is illustrated by using a dashed line in FIG. 6.

It should be understood that the first AP determines that transmission of the first traffic on the first reserved resource is not completed. In other words, transmission duration of the traffic volume of the first traffic is greater than the duration occupied by the first reserved resource. In this case, the first AP may send the action frame to the first device before the end moment of the first reserved resource, to trigger the temporarily reserved resource, namely, the third reserved resource, for the first traffic. It should be understood that the start moment of the third reserved resource is later than the end moment of the first reserved resource. In this way, after the first traffic is transmitted on the first reserved resource, the first traffic continues to be transmitted on the third reserved resource.

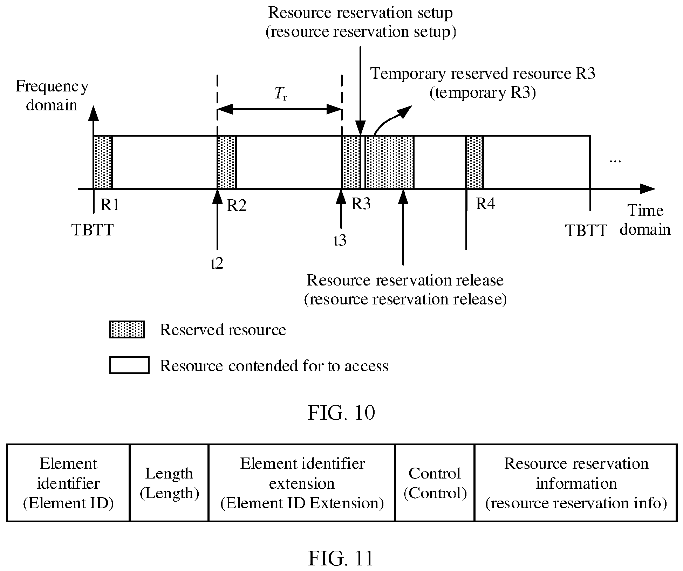

For ease of understanding, FIG. 10 is a schematic diagram of triggering a temporarily reserved resource for first traffic. R1 to R4 are the N first reserved resources reserved for the first traffic, and duration occupied by any one of R1 to R4 is determined based on the traffic volume of the first traffic. The first traffic arrives at a start moment t2 of R2, and then the first traffic is transmitted on R2. A burst occurs in the first traffic on R3. For example, in duration occupied by R3, the first traffic may have other interference. As a result, transmission of the first traffic cannot be completed in the duration occupied by R3. In other words, before an end moment t3 of R3, transmission of the first traffic is not completed. The first AP may perform resource reservation setup (resource reservation setup) before the end moment t3 of R3. For example, the first AP sends an action frame to the first device before t3, to temporarily reserve a third reserved resource (for example, temporary R3 in FIG. 10) for the first traffic. In other words, the start moment of the third reserved resource is later than the end moment of R3. Then, the first traffic continues to be transmitted on the temporary R3.

It should be understood that if the first AP occupies a wide channel, and resources reserved for the first traffic are all frequency domain resources of the channel, resource waste may be caused. Therefore, in this embodiment of this application, the first traffic and the common traffic are allowed to reuse the N first reserved resources. In other words, the first traffic and the common traffic are allowed to be transmitted in a hybrid manner on the N first reserved resources, to improve resource utilization. For example, when the first AP occupies a wide channel, the first AP may choose to reserve partial frequency domain resources of the channel for the first traffic to contention-based access, and another terminal or traffic may be allowed to use frequency domain resources, other than the partial frequency domain resources, of the channel. This can improve resource utilization and traffic transmission efficiency of the entire system. It should be noted that the first traffic herein may also be considered as specific traffic, for example, traffic having a high delay requirement. Correspondingly, the common traffic is traffic having a low delay requirement.

In an example, the first indication information further indicates that the first traffic is allowed to contention-based access some of the N first reserved resources. The first device receives the first indication information, and contends for partial frequency domain resources in the N first reserved resources to access the channel. A frequency domain resource (which may be briefly referred to as a remaining frequency domain resource) in the N first reserved resources other than the partial frequency domain resource may be contended for by another traffic to access the channel, or may be used to transmit the another traffic.

Similarly, the first indication information further indicates that some of the N first reserved resources are used to schedule or transmit the first traffic. The first device receives the first indication information, and transmits the first traffic on some of the N first reserved resources. The first AP may schedule the first traffic on the some of the N first reserved resources. The remaining frequency domain resource in the N first reserved resources may be used to transmit other traffic. For the first AP, the first traffic may be scheduled on some of the N first reserved resources, and other traffic may be scheduled on the remaining frequency domain resource. For example, when there is a large volume of downlink low-delay traffic, the first AP may choose to send the downlink low-delay traffic on the remaining frequency domain resource in the N first reserved resources. If some remaining frequency domain resources are idle, the first AP may choose to send the common traffic on the idle frequency domain resources. This can further improve resource utilization and traffic transmission efficiency. For another example, when there is a small volume of downlink low-delay traffic, the first AP may choose to send the low-delay traffic and the common traffic on the N first reserved resources, and send the common traffic on a resource other than the N first reserved resources.

In this embodiment of this application, the management frame may be a beacon frame, an association response frame, a probe response frame, an action frame, or the like. The first indication information, the second indication information, or the first request message may be carried in a defined field in the management frame, or may be carried in a newly added field in the management frame, or may be carried in a defined field and a newly added field in the management frame. This is not limited in this embodiment of this application.

It should be understood that there may be various types of terminals in the communication network, for example, a terminal (which may be briefly referred to as a legacy (legacy) terminal) that supports a version earlier than the Wi-Fi 6 protocol, and a terminal (which may be briefly referred to as an EHT terminal or an EHT+ terminal) that supports the IEEE 802.11ax next-generation WLAN protocol (EHT, extremely high throughput).

Generally, the legacy terminal supports the common traffic, and the EHT terminal supports the low-delay traffic. However, to shorten a transmission delay between legacy terminals, the AP usually indicates the legacy terminal to be quiet on some time-frequency resources. Similarly, in this embodiment of this application, other traffic may also be quiet on the time-frequency resource reserved for the first traffic, to shorten a transmission delay of the first traffic. In this case, a current management frame format may be compatible, and the first indication information is carried in a defined field of the management frame. For example, the first indication information may be carried in a quiet element (quiet element) field in the management frame.

For an EHT terminal or an EHT+ terminal, a new field, for example, a first element field, may be added to the management frame. The first indication information may be carried in the first element field. The first indication information carried in the first element field may indicate the time-frequency resource reserved for the first traffic. Therefore, the first element field may be referred to as a resource reservation element (resource reservation element) field. Certainly, a specific name of the first element field is not limited in this embodiment of this application.

However, if both a legacy terminal and an EHT terminal or an EHT+ terminal exist in a network, when the first indication information is carried only in the first element field, because the legacy terminal cannot identify a newly added field in a management frame, the legacy terminal cannot be quiet on a time-frequency resource reserved for the EHT terminal or the EHT+ terminal. In this case, common traffic of the legacy terminal may collide with low-delay traffic of the EHT terminal or the EHT+ terminal. In this case, the first indication information may be carried in the resource reservation element field and at least one quiet element field. For example, if the resource reservation element field indicates the N first reserved resources, the first indication information may be further carried in N quiet element fields, and the N quiet element fields one-to-one correspond to the N first reserved resources. When receiving the first indication information, the EHT terminal or the EHT+ terminal access a channel by contending on the N first reserved resources, to transmit the first traffic. When the legacy terminal receives the first indication information, the legacy terminal keep quiet on the N first reserved resources. In this way, when both the legacy terminal and the EHT terminal or the EHT+ terminal exist in the network, the common traffic of the legacy terminal does not collide with the low-delay traffic of the EHT terminal or the EHT+ terminal, and the delay requirement of the low-delay traffic of the EHT terminal or the EHT+ terminal is met.

In an example, FIG. 11 is a schematic diagram of a format of a resource reservation element. The resource reservation element may include an element identity (Element ID) field, a length (Length) field, an element identity extension (Element ID Extension) field, and a resource reservation information (Resource Reservation info) field. Values of the element ID field and the element ID extension field are one of reserved values in the standard. For example, Element ID = 255, and Element ID Extension = 12.

It should be understood that a specific implementation of the resource reservation element field may alternatively be different due to different management frames, indication content, and the like. In this embodiment of this application, the resource reservation element field may include a plurality of subtypes. The subtype herein is a possible implementation of the resource reservation element field. In a specific implementation process, a subtype corresponding to the resource reservation element field may be indicated by control (control) shown in FIG. 11.

In an example, Table 1 describes an example of a subclass included in the resource reservation element field. The resource reservation element field may include three subtypes. The three subtypes are periodic resource reservation, aperiodic resource reservation, and reserved resource release. Specific implementations of different subtypes of the resource reservation element field may alternatively be different. The following describes in detail a specific implementation of the resource reservation element field with reference to Table 1.

**Table 1**

| Value of a control field | | |
|---|---|---|
| 0 | Regular resource reservation (Regular Resource reservation) | Carried in a beacon frame, a probe response frame, and an association response frame (Carried in Beacon, probe response, association response frame) |
| 1 | Short regular resource reservation (Short Regular Resource Reservation) | Carried in a beacon frame, a probe response frame, and an association response frame, when a quiet element field also appears in these frames (Carried in Beacon, probe response, association response frame, when Quiet element also appears in these frames). |
| 2 | Temporary resource reservation setup (Temp Resource Reservation setup) | Carried in an action frame (Carried in Action frame) |
| 3 | Temporary resource reservation release (Temp Resource Reservation release) | Carried in an action frame (Carried in Action frame) |
| 4 | Regular resource reservation release (Regular Resource Reservation release) | Carried in a beacon frame, a probe response frame, and an association response frame (Carried in Beacon, probe response, association response frame) |
| 5-255 | Reserved | |

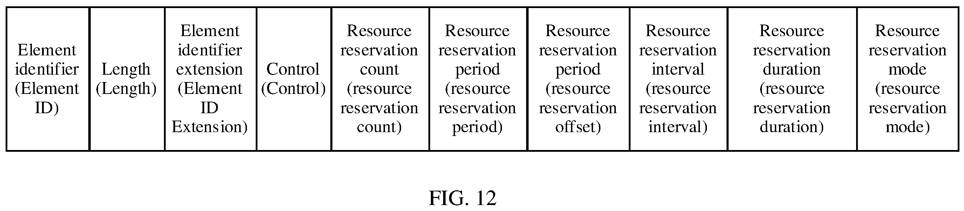

The regular resource reservation field in Table 1 may be used to reserve a periodic resource. A format of a regular resource reservation element (Regular Resource reservation element) field may be shown in FIG. 12. The regular resource reservation element field may include an element ID field, a length field, an element ID extension field, a control field, a resource reservation count (Resource Reservation count) field, a resource reservation period (Resource Reservation period) field, a resource reservation offset (resource reservation offset) field, a resource reservation interval (resource reservation interval) field, a resource reservation duration (resource reservation duration) field, and a resource reservation mode (resource reservation mode) field.

The resource reservation count field may indicate start time (in a unit of TBTT) of a next beacon interval including resource reservation, namely, a quantity of TBTTs after which one beacon interval including resource reservation appears. The resource reservation period field may indicate a period (in a unit of TBTT) including resource reservation, namely, a quantity of TBTTs after which one beacon interval including resource reservation appears. The resource reservation offset field may indicate an offset of TBTT that is closest to a first reserved resource. The resource reservation interval field may indicate interval duration of resource reservation. The resource reservation duration field may indicate duration of resource reservation. The resource reservation mode field may indicate a resource reservation mode, for example, free contention, waiting for AP scheduling, low-delay reservation, AP-AP communication, and a dual-link operating mode. The low-delay reservation may further include NS/EP traffic reservation, real-time traffic reservation, wireless control traffic reservation, and the like. The dual-link operating mode further includes a reservation mode only on a current link and a reservation mode on a plurality of links.

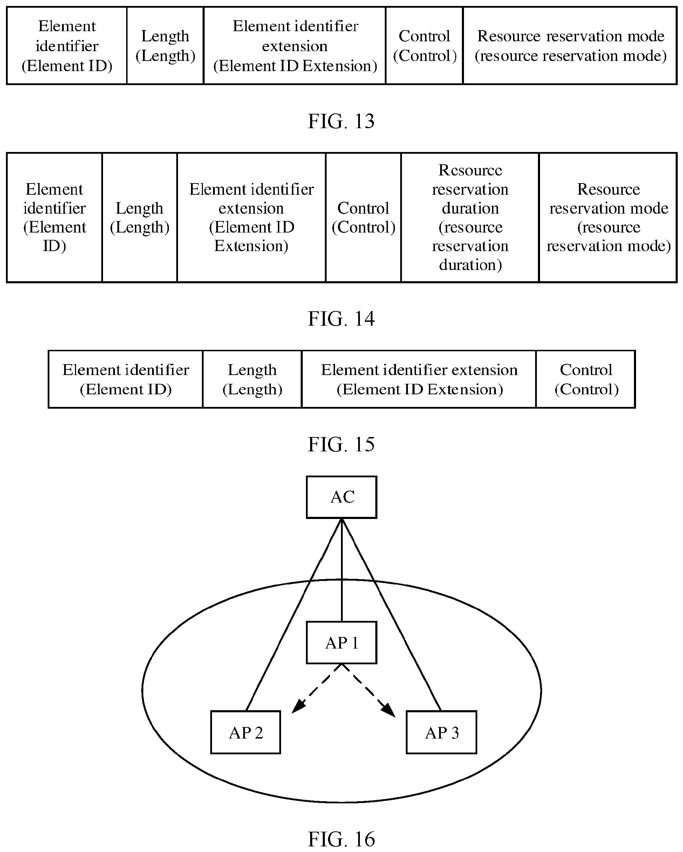

The short regular resource reservation field in Table 1 may also be used to reserve a periodic resource. A format of a short regular resource reservation element (Short Regular Resource reservation element) field may be shown in FIG. 13. Content indicated by each field included in the short regular resource reservation element field is the same as that in FIG. 12. Details are not described herein again.

It should be noted that the short regular resource reservation element field is also used in cooperation with an existing quiet element in the 802.11 standard, to periodically reserve a resource. Compared with the regular resource reservation field shown in FIG. 12, signaling overheads are low, and signaling may be reduced.

The temp resource reservation setup in Table 1 may be used to reserve an aperiodic resource. A format of the temp resource reservation setup field may be shown in FIG. 14. Content indicated by each field included in the temp resource reservation setup field is the same as that in FIG. 12. Details are not described herein again.

The foregoing are several implementations of implementing periodic resource reservation and aperiodic resource reservation by using the resource reservation element field. Regardless of a specific form, the resource reservation element field may be carried in a management frame such as a beacon frame, a probe response frame, or an association response frame. The following describes an implementation of resource reservation release by using the resource reservation element field.

In this embodiment of this application, two types of resource reservation release are included, for example, regular resource reservation release and temporary resource reservation release. FIG. 15 shows a format of the resource reservation release field. Content indicated by each field included in the resource reservation setup field is the same as that in FIG. 12. Details are not described herein again. The regular resource reservation release field may indicate to release a periodicity reserved by using the regular resource reservation field. The regular resource reservation release field is usually carried in a beacon frame and is paired with the regular resource reservation field. The temp resource reservation release field may indicate to release an aperiodic reserved resource reserved by using the temporary resource reservation setup field. The temp resource reservation release field is usually carried in an action frame and is paired with the temporary resource reservation setup field.

In this embodiment of this application, a mechanism in which the N first reserved resources are reserved for the first traffic to contention-based access may be further used for communication between APs. It should be understood that, in communication between an AP and a STA, the N first reserved resources reserved for the first traffic are AP-STA dedicated resources. In communication between APs, a resource allocated for AP-AP communication is usually an AP-AP dedicated resource, for example, a backhaul channel. However, in this embodiment of this application, the first traffic may be traffic between an AP and a STA, or may be traffic between APs. For example, the first traffic is traffic between the first AP and the second AP. In this case, the N first reserved resources (the reserved AP-STA dedicated resources) reserved by the first AP for the first traffic may be used for communication between APs. In other words, in this embodiment of this application, AP-AP communication may use an AP-STA dedicated resource. This improves resource utilization and reduces reserved resource consumption.

It should be understood that a plurality of intra-frequency APs may form a coordination group, and the APs in the coordination group may communicate with each other. One AP in the coordination group may be referred to as a primary AP. The primary AP has a coordination control function, and may coordinate communication of other APs. For example, the primary AP may allocate resources to other APs. All APs in the AP coordination group contention-based access a same resource. To avoid a collision between the plurality of APs, the backoff mechanism in the P2P communication in FIG. 3 may be used. However, when two adjacent APs are close to each other, and resources of the two APs are not aligned (in other words, the two APs do not learn of a start moment and an end moment of the resources), the two APs do not learn of a resource location to back off, and therefore mutual interference may still exist.

Therefore, in this embodiment of this application, an AP may adjust a reserved resource of the AP based on the N first reserved resources reserved for the first AP. In this way, the reserved resource of the AP may be aligned with the reserved resources of the first AP. According to the method, reserved resources of a plurality of APs in a network may be aligned. In this way, the APs learn of a resource location to back off. This avoids a collision between the plurality of APs and improves reliability of communication between the APs.

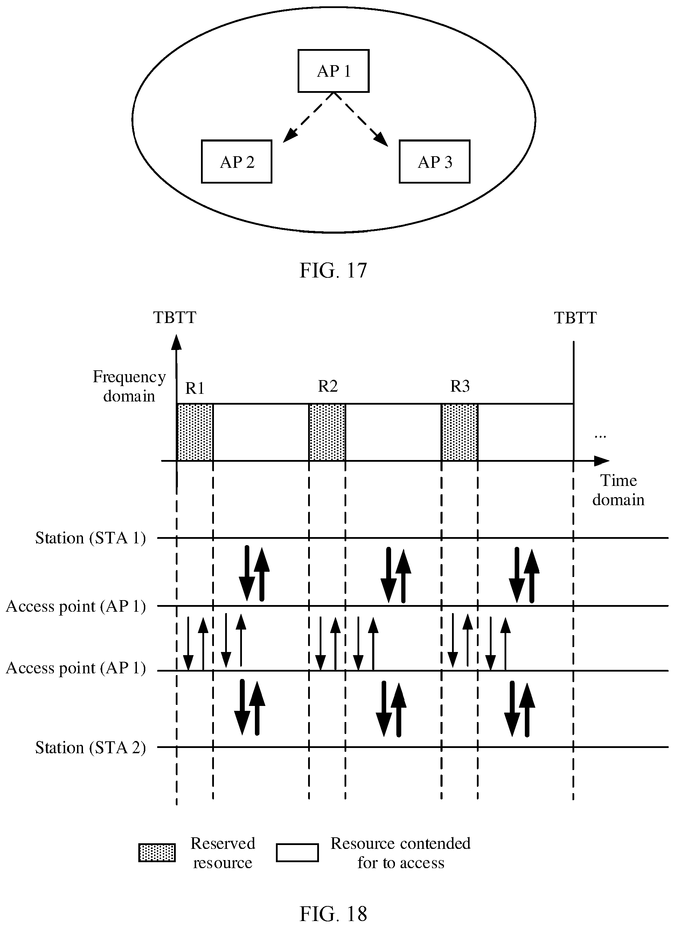

For example, FIG. 16 and FIG. 17 each show a schematic diagram of an architecture of an AP coordination group. FIG. 16 shows an example in which a network includes an access controller (access controller, AC) and three APs. The three APs are respectively an AP 1, an AP 2, and an AP 3. The AP 1 has a coordination control function. When an AC or a coordinator (coordinator), for example, the AP 1, exists in the network, the AC or the coordinator may configure the three APs (the AP 1, the AP 2, and the AP 3) of the network to form the collaboration group, and specify one of the APs (for example, the AP 1) as a primary AP. It should be understood that, if the AC configures the collaboration group, the AP 1 does not need to configure a collaboration group. Therefore, FIG. 16 uses dashed lines to indicate that the AP 1 configures a collaboration group.

FIG. 17 shows an example in which a network includes three APs. The three APs are respectively an AP 1, an AP 2, and an AP 3. All the three APs have a coordination control function. Any AP having a coordination control function in the network may actively initiate negotiation between APs based on locations and configuration parameters of the APs, to form an AP coordination group. The APs that construct the coordination group may specify an AP in the network as a primary AP. It should be noted that any AP having a coordination control function may form a coordination group, and all the three APs in FIG. 17 may form a coordination group. In FIG. 17, for example, the AP 1 forms a coordination group. Therefore, dashed lines are used for illustration in FIG. 17. After the AP 1 and the AP 2 coordinate, the AP 1 and the AP 2 may exchange information required for coordination, for example, received signal strength indication (received signal strength indication, RSSI) information of a neighboring cell STA, channel state information (channel state information, CSI), user buffer information, and time-frequency synchronization information between APs.

The primary AP may reserve a resource for the first traffic. For example, the primary AP may send the foregoing first indication information. For example, the primary AP periodically sends a beacon frame. The first indication information may be carried in a resource reservation element (Resource Reservation element) field newly added to the beacon frame. The first indication information may indicate the N first reserved resources reserved for the first traffic, and the N first reserved resources may be periodic resources. It is assumed that an interval between any two of the N first reserved resources is *Tᵣ*.

To avoid interference caused by traffic of a STA to traffic between APs, the primary AP may quieten, on the N first reserved resources, all STAs in a cell served by the primary AP. In other words, the primary AP quietens, on the N first reserved resources, the STAs associated with the primary AP. However, the primary AP can quieten only the STAs associated with the primary AP, and cannot quieten a remaining AP in the coordination group. Therefore, to avoid interference between APs in the coordination group, the remaining AP in the coordination group other than the primary AP may adjust, based on the N first reserved resources reserved by the primary AP for the first traffic, a resource that can be reserved by the remaining AP. For example, the remaining AP in the coordinating group may monitor the beacon frame of the primary AP through an air interface, to obtain TBTT *T_{B}* and a resource reservation period *Tᵣ* of the primary AP. Each AP in the remaining AP adjusts a sending moment of TBTT of a cell served by the AP to *T_{B}* + m × *Tᵣ,* and sets a resource reservation period of the cell served by the AP to *Tᵣ,* where m is an integer greater than or equal to 0. In this way, the reserved resources of the APs in the coordination group can be aligned. When the AP 1 and the AP 2 exchange coordination information on R1 to R3, the P2P backoff mechanism shown in FIG. 3 may be used. This avoids mutual interference between the APs and shortens a traffic transmission delay between the APs. Similarly, the remaining AP may also quieten, on the N first reserved resources, STAs associated with the remaining AP. In this way, all the STAs associated with all the APs in the coordinating group keep quiet on the N first reserved resources, and do not participate in channel contention, so that communication between the APs is not interfered with by the STAs.

In an example, the first device is a second AP that is in a same AP coordination group as the first AP. After receiving a management frame, the second AP may further adjust, based on a sending moment T_{B} of the management frame and an interval Tᵣ between two adjacent first reserved resources, a moment at which the second AP sends a management frame to *T_{B}* + m × *Tᵣ,* and set a resource reservation period of a cell served by the second AP to Tᵣ, where m is an integer greater than or equal to 0. In this way, all the APs in the entire AP coordination group send a management frame at a same moment, and resource reservation periods of cells served by the APs are also the same. In this way, the APs in the AP collaboration group may learn of a start moment and an end moment of each reserved resource of each other, and may back off at an appropriate time. This avoids a collision between the APs.

For ease of understanding, FIG. 18 is a schematic diagram of AP coordination group communication based on quiet time period protection according to an embodiment of this application. FIG. 18 shows an example of two APs (an AP 1 and an AP 2) and two STAs (a STA 1 and a STA 2). The AP 1 and the AP 2 are located in a same coordination group. For example, the AP 1 is a primary AP. The AP 1 may periodically send a beacon frame. A reserved resource field newly added to the beacon frame may indicate information about N first reserved resources (for example, R1, R2, and R3) reserved for the first traffic, for example, duration occupied by each first reserved resource, and an interval *Tᵣ* between two adjacent first reserved resources. The AP 2 may monitor the beacon frame sent by the AP 1, determine the N first reserved resources reserved by the AP 1, then adjust a sending moment of TBTT of a cell served by the AP 2 to *T_{B}* + m × *Tᵣ,* and set a resource reservation period of the cell served by the AP 2 to *Tᵣ*. In this way, the AP 2 may adjust a reserved resource of the AP 2 to be consistent with the reserved resource of the AP 1, or it may be considered that the reserved resource of the AP 2 is aligned with the reserved resource of the AP 1 (as shown by dashed lines in FIG. 18). Because reserved resources of the AP 1 and the AP 2 are aligned, the P2P backoff mechanism shown in FIG. 3 may be used. In other words, the AP 2 clearly learns of a resource location to back off, so that a collision between the AP 2 and the AP 1 can be avoided, and reliability of communication between the AP 1 and the AP 2 can be improved.

On R1 to R3, the STA 1 and the STA 2 are quiet. In other words, the STA 1 and the STA 1 do not contention-based access R1 to R3, so that an access delay of the AP 1 and the AP 2 on R1 to R3 can be shortened. The STA 1 and the STA 2 contention-based access a time-frequency resource other than R1 and R3 to transmit traffic (as shown by bold-line arrows in FIG. 18). On R1 to R3, the AP 1 and the AP 2 access a channel, and may further exchange the first traffic (as shown by thin-line arrows in FIG. 18). After accessing the channel, the AP 1 and the AP 2 continue to transmit the first traffic. For example, the AP 1 and the AP 2 contend for a time-frequency resource after R1 to transmit the first traffic. In addition, in the network, the N first reserved resources reserved by the AP 1 for the first traffic do not need to be time-frequency resources dedicated for communication between APs. For example, the time-frequency resources dedicated for communication between an AP and a STA may be reused, so that resource consumption can be reduced.

Generally, duration occupied by each reserved resource is long, for example, is greater than a transmit opportunity (transmit opportunity, TXOP). This is because the reserved resource may be used to send traffic of a plurality of terminals. Although a traffic volume of each terminal is small, the plurality of traffic can be transmitted only after being sent for a plurality of times. Therefore, generally the duration occupied by the reserved resource is long. However, for communication between APs, a traffic volume of traffic between APs is usually large, and data can be transmitted at a time. If duration occupied by a resource reserved for the first traffic is long, channel use efficiency is significantly reduced. Therefore, in this embodiment of this application, the duration occupied by each reserved resource may be less than the TXOP or even shorter. For example, duration occupied by R1 is dozens of microseconds or hundreds of microseconds. For the AP 1 or the AP 2, the AP 1 or the AP 2 only needs to complete channel contention in the resource reservation duration, to obtain a channel access opportunity. After obtaining the channel access opportunity, the AP 1 or the AP 2 may reset the TXOP by using a control frame. For example, the AP 1 or the AP 2 may reset the TXOP by using a trigger frame or the control frame (Request to Send/Clear to send, RTS/CTS) frame. This solution can meet a delay requirement of traffic between APs, and also improves channel use efficiency.

Further, because multiple types of low-delay traffic may exist on a network, the AP may reserve resources for each type of traffic to meet a delay requirement of each type of low-delay traffic. For example, there are two types of low-delay traffic on the network, for example, NS/EP traffic and real-time traffic. The AP may add two regular resource reservation fields to the beacon frame. The two regular resource reservation fields one-to-one correspond to the foregoing two types of low-delay traffic. Alternatively, the AP may sequentially send two beacon frames, where one beacon frame is used to reserve a resource for one type of traffic, and the other beacon frame is used to reserve a resource for another type of traffic.

In addition, if the first AP always reserves a resource for the first traffic, namely, after the first AP reserves a resource for the first traffic for the first time, even if a status of the network is improved subsequently, the first AP still reserves a resource for the first traffic. Obviously, this is unfair to other traffic, and causes resource waste. Therefore, in this embodiment of this application, after the first AP reserves the N first reserved resources for the first traffic, if it is determined that the status of the network is improved or the first traffic ends, the first AP may release the resource reserved for the first traffic, to balance delay requirements of a plurality of traffic as much as possible.

That the first AP determines that the status of the network is improved may be that the first AP actively detects the status of the network, or may be that the first device notifies the first AP that the status of the network is improved. If the first device determines that the status of the network is improved or the first traffic ends, the first device may request the first AP to release the N first reserved resources. For example, the first device may send a second request message to the first AP, where the second request message is used to request the first AP to release the N first reserved resources. The first AP receives the second request message, and sends, to the first device, a management frame for releasing the N first reserved resources, to indicate to release the N first reserved resources. Certainly, when the first AP determines that the status of the network is improved, the first AP actively sends, to the first device, the management frame for releasing the N first reserved resources, to indicate the first device to cancel the N first reserved resources reserved for the first traffic. Similarly, for a temporarily reserved resource triggered by the first AP for the first traffic, if the first traffic ends, the first device may also request the first AP to release the temporarily reserved resource. As shown in FIG. 10, the first AP may send, before the end moment of the temporarily reserved resource R3, a management frame for temporary resource reservation release (resource reservation release).

The following describes in detail the methods provided in embodiments of this application with reference to a specific scenario.

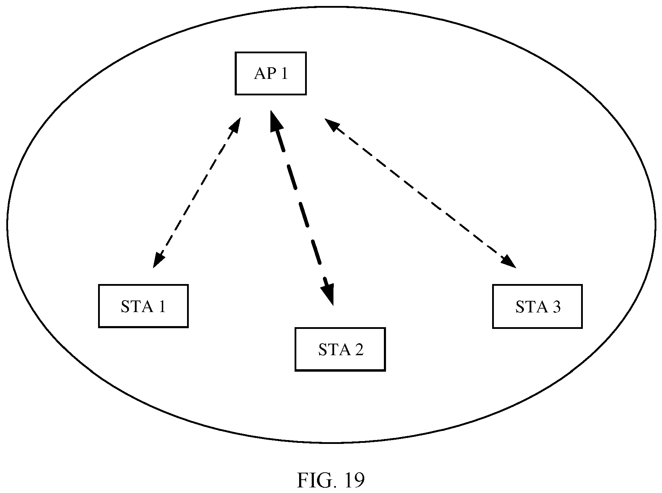

FIG. 19 is a diagram of a network architecture of communication between an AP and a STA according to an embodiment of this application. FIG. 19 shows an example of one AP (an AP 1) and three STAs. The three STAs are respectively a STA 1, a STA 2, and a STA 3. The AP 1 may communicate with the three STAs. The AP 1 and the three STAs may establish a basic service set (Basic Service Set, BSS). In FIG. 18, for example, low-delay traffic and common traffic coexist in a single BSS. When the low-delay traffic and the common traffic coexist, a method for reserving a resource for first traffic (the low-delay traffic) in this embodiment of this application can shorten a channel access delay of the first traffic, and shorten a transmission delay of the first traffic. The following separately uses examples of uplink transmission and downlink transmission, to describe how to reserve a resource for the first traffic and how to perform channel access for the first traffic on the reserved resource in this embodiment of this application.

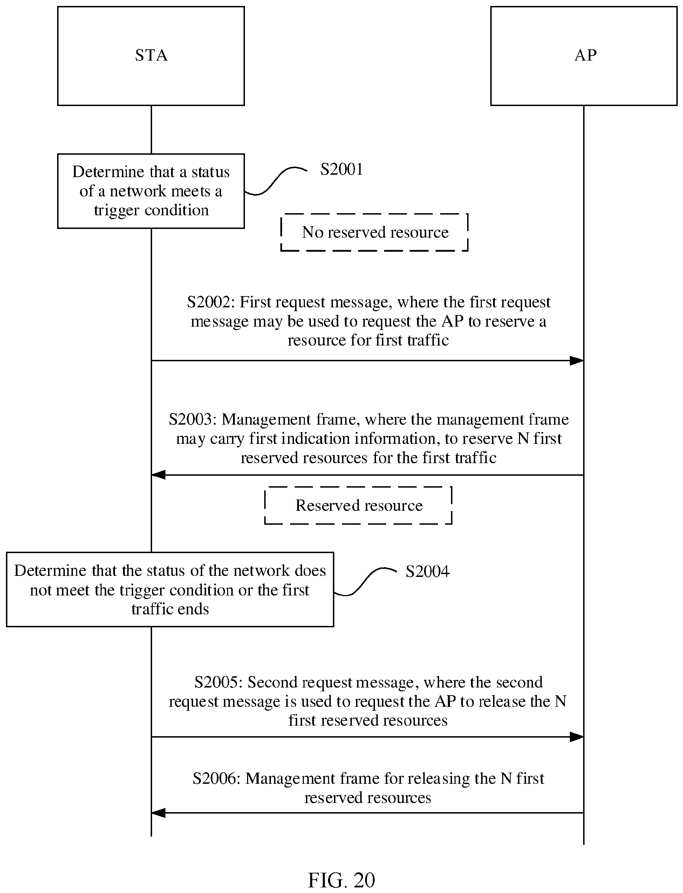

FIG. 20 is a flowchart of triggering, by a STA, resource reservation for uplink low-delay traffic. When the STA needs to send the uplink low-delay traffic (for example, the first traffic), the STA may request an AP to reserve a resource for the first traffic. The resource is reserved for the first traffic. The AP may not distinguish whether the first traffic is low-delay traffic. Therefore, the STA needs to notify the AP that the first traffic is low-delay traffic, namely, that the resource needs to be reserved.

It should be understood that although the first traffic is traffic having a high delay requirement, if a status of a network is good, a delay requirement of the first traffic can still be met. In this case, when the status of the network is good, if the first AP still reserves a resource for the first traffic, resource waste is obviously caused. To avoid resource waste, in this embodiment of this application, before the STA requests the AP to reserve a resource for the first traffic, the STA may determine whether a current status of the network meets the delay requirement of the first traffic. For example, if the status of the network is good, the status is more likely to meet the delay requirement of the first traffic; and if the status of the network is poor, the status is less likely to meet the delay requirement of the first traffic.

In an example, the STA triggers the uplink low-delay traffic, and the STA may notify the AP whether the current status of the network meets the delay requirement of the first traffic.

S2001: The STA determines that the status of the network meets a trigger condition, where the trigger condition is that sending delays of a plurality of data packets exceed a preset threshold.

In this embodiment of this application, the trigger condition may be set based on a probability that the traffic delay requirement is met. When the status of the network meets the trigger condition, the status of the network is poor and does not meet the delay requirement of the first traffic. The trigger condition is that sending delays of a plurality of data packets exceed a preset threshold, where the preset threshold may be obtained through experimental measurement or based on historical data.

For example, the plurality of data packets are L consecutive data packets, where L is an integer greater than or equal to 1. If the sending delays of the L consecutive data packets exceed the delay threshold, it indicates that the sending delay of each of the L data packets exceeds the delay requirement, and it may be considered that the status of the network is poor.

For another example, the plurality of data packets are L data packets in P data packets, where L is an integer greater than or equal to 1, and P is greater than L. If the sending delays of the L consecutive data packets in the P data packets exceed the delay threshold, it indicates that sending delays of some data packets in the P data packets exceeds the delay threshold, and sending delays of some data packets do not exceed the delay threshold. It may be considered that the status of the network is unstable (unstable). On the whole, the status of the network is poor.

In addition, it is assumed that the STA needs to send 10 data packets. After consecutively sending three data packets on a same time-frequency resource, due to a delay, the STA has no opportunity to send remaining data packets. In this case, it may also be considered that the status of the network is poor. Therefore, in this embodiment of this application, that the sending delay of the data packet exceeds the delay threshold may also be considered as that the sending delay of the data packet reaches K times the delay threshold. For example, sending delays of K consecutive data packets reach p times the delay threshold, where K is an integer greater than or equal to 1, and p is a real number greater than 1.

S2002: The STA sends a first request message to the AP, and the AP receives the request message, where the first request message may be used to request the AP to reserve a resource for the first traffic.

The first request message may be carried in any one of the foregoing management frames or another possible management frame. This is not limited in this embodiment of this application.

S2003: The AP sends a management frame to the STA, and the STA receives the management frame, where the management frame may carry the foregoing first indication information, to reserve N first reserved resources for the first traffic.

After receiving the first request message, the AP may determine, based on a delay requirement and a traffic volume of the first traffic, the N first reserved resources that need to be reserved for the first traffic. For example, the AP may determine, based on the delay requirement of the first traffic, an interval Tᵣ between two adjacent first reserved resources, and determine duration occupied by each first reserved resource. Then, the AP sends the management frame to the STA, where the management frame may carry the foregoing first indication information, to reserve the N first reserved resources for the first traffic. For example, the foregoing resource reservation element field may be newly added to the management frame to carry the first indication information.

After reserving the N first reserved resources for the first traffic, the AP may obtain uplink and downlink low-delay traffic of the STA on the N first reserved resources through scheduling by using a trigger frame. Because only the first traffic is allowed to contention-based access the N first reserved resources, it may be considered that all STAs in a cell served by the AP are quiet for traffic other than the first traffic on the N first reserved resources. Because all the STAs in the cell served by the AP are quiet for the traffic other than the first traffic on the N first reserved resources, the traffic other than the first traffic does not contend with the first traffic for the N first reserved resources. This increases an opportunity for the first traffic to access a channel, and shortens a channel access delay of the first traffic. After the first traffic accesses the channel, the first traffic may continue to be transmitted on the reserved resource, so that a transmission delay of the first traffic is further shortened.

In this embodiment of this application, a resource reserved for traffic is limited to be used in a contention manner. If there are a plurality of low-delay traffic, a probability of concurrent transmission of the plurality of low-delay traffic may be high or low. If it is considered, by default, that the probability of concurrent transmission of the plurality of low-delay traffic is high, certainly a large quantity of resources need to be reserved for the plurality of low-delay traffic. However, actually the probability of concurrent transmission of the plurality of low-delay traffic is low, and resource waste is obviously caused. Therefore, in this embodiment of this application, the AP may determine, based on a probability of concurrent transmission of specific traffic (for example, the first traffic) of different users, the N first reserved resources reserved for the first traffic. For example, if a probability of concurrent transmission of the first traffic of 10 users is 20%, the first AP may reserve 2N first reserved resources for the first traffic. Compared with reserving 10N first reserved resources, resource consumption can be obviously reduced.

It should be understood that, if the status of the network is subsequently improved, the AP still reserves a resource for the first traffic. Obviously, this is unfair to other traffic. Therefore, in this embodiment of this application, after the AP reserves the N first reserved resources for the first traffic, if it is determined that the status of the network is improved or the first traffic ends, the AP may cancel (release) the resource reserved for the first traffic, to balance delay requirements of a plurality of traffic as much as possible.

S2004: The STA determines that the status of the network does not meet the trigger condition or the first traffic ends.

S2005: The STA sends a second request message to the AP, where the second request message is used to request the AP to release the N first reserved resources.

If the STA determines that the status of the network is improved or the first traffic ends, the STA may request the AP to release the N first reserved resources.

S2006: The AP sends, to the STA, a management frame for releasing the N first reserved resources.

The AP receives the second request message, and sends, to the STA, the management frame for releasing the N first reserved resources. For example, the AP may cancel, by sending the management frame (for example, a beacon frame), the resource reserved for the first traffic. The foregoing resource reservation release field may be newly added to the beacon frame, to indicate to release the resource reserved for the first traffic. After receiving the beacon frame, the STA may determine that the resource previously reserved for the first traffic is canceled.

It should be understood that alternatively the AP may actively detect the status of the network. When the AP determines that the status of the network is improved, the AP actively sends, to the STA, a beacon frame for releasing the N first reserved resources.

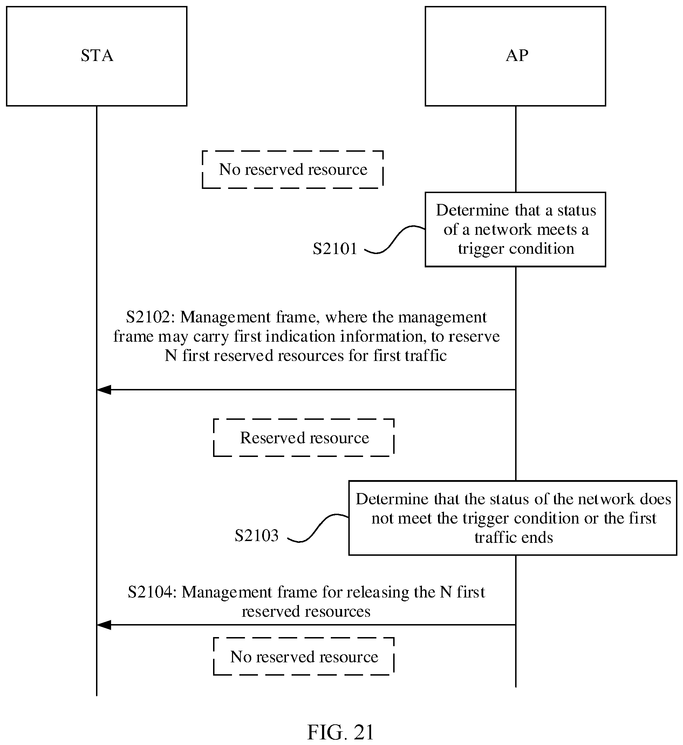

FIG. 21 is a flowchart of triggering, by an AP, resource reservation for downlink low-delay traffic. The AP may schedule the downlink low-delay traffic (for example, the first traffic). Before scheduling the first traffic, the AP may determine a current status of a network. If the current status of the network does not meet the foregoing trigger condition, the current status of the network is poor. In this case, the AP may reserve a resource, for example, N first reserved resources, for the first traffic to contention-based access. The procedure for the AP to trigger resource reservation for the downlink low-delay traffic is as follows:

S2101: The AP determines that the status of the network meets the trigger condition.

S2102: The AP sends a management frame to a STA, and the STA receives the management frame, where the management frame may carry the foregoing first indication information, to reserve the N first reserved resources for the first traffic.

S2103: The STA determines that the status of the network does not meet the trigger condition or the first traffic ends.

S2104: The AP sends, to the STA, a management frame for releasing the N first reserved resources.

Specifically, for an implementation in which the AP reserves the N first reserved resources for the first traffic, refer to related descriptions in the embodiment in FIG. 20. Details are not described herein again. After reserving the N first reserved resources for the first traffic, the AP may obtain uplink and downlink low-delay traffic of the STA on the N first reserved resources through scheduling by using a trigger frame (Trigger frame). Similar to the embodiment in FIG. 20, the AP always reserves a resource for the first traffic. Obviously, this is unfair to other traffic. Therefore, after the AP reserves the N first reserved resources for the first traffic, if it is determined that the status of the network is improved or the first traffic ends, the AP may cancel the resource reserved for the first traffic, to balance delay requirements of a plurality of traffic as much as possible. Specifically, for an implementation in which the AP cancels the N first reserved resources reserved for the first traffic, refer to related descriptions in the embodiment in FIG. 20. Details are not described herein again.

A specific implementation of reserving a resource for the first traffic in this embodiment of this application varies with an attribute of the traffic, for example, whether the traffic is burst traffic, or whether a terminal in the network is a legacy terminal or an EHT terminal. The following describes in detail a specific example.

Example 1: If the first traffic is burst traffic, the AP may further trigger a temporarily reserved resource for the first traffic, to ensure that the first traffic can be properly transmitted, and improve reliability of communication between the AP and the STA. For a specific manner in which the AP reserves the N first reserved resources and the temporarily reserved resource for the first traffic, refer to the descriptions in the foregoing embodiment. Details are not described herein again. It should be noted that, if the STA completes transmission of the first traffic, the STA may request the AP to release the temporarily reserved resource. The example shown in FIG. 10 is still used. If the STA has completed transmission of the first traffic from a moment *t*₂ to a moment *t*₃, the temporarily reserved resource may be released, to reserve more resources for other traffic to contention-based access, so that a transmission delay of each traffic is shortened.

Example 2: Both the legacy terminal and the EHT terminal coexist in the network. The AP reserves the N first reserved resources for the first traffic, and may further set, for each legacy terminal, a quiet interval corresponding to each first reserved resource. In this way, it can be ensured that the legacy terminal is quiet in the resource reserved for the first traffic, interference caused by the legacy terminal to the EHT terminal is avoided, and a low delay requirement for transmitting the first traffic by the EHT terminal is ensured.

In the network shown in FIG. 19, the STA 1 is a legacy terminal, the STA 2 is an EHT terminal, and the STA 3 is also an EHT terminal. If the first indication information sent by the AP is carried in a newly added field, namely, a resource reservation element field, of the management frame, the legacy terminal obviously cannot identify the resource reservation element field, and therefore cannot be quiet on a time-frequency resource reserved for the EHT terminal. In this case, common traffic of the legacy terminal may collide with low-delay traffic of the EHT terminal. In this case, the management frame that carries the first indication information may include a resource reservation element field and a quiet element field. If the STA is a legacy terminal, the STA performs quieting based on a quiet interval indicated by the quiet element field, or if the STA is a non-legacy terminal, the AP sets the N first reserved resources based on a quiet interval indicated by the quiet element field.

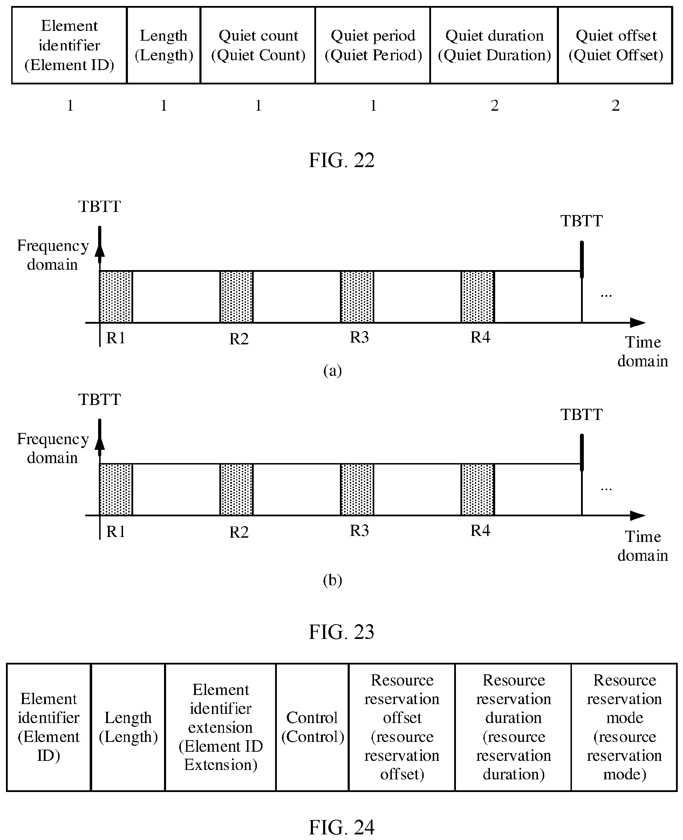

For example, FIG. 22 is a schematic diagram of a structure of an existing quiet element in the existing 802.11 standard. A quiet count field may indicate start time (in a unit of TBTT) of a next quiet interval. A quiet period field may indicate a quiet period (in a unit of TBTT), namely, a quantity of TBTTs after which one quiet period appears. The quiet duration field may indicate a length of the quiet interval. The quiet offset field may indicate an offset of TBTT that is closest to the quiet interval.

In this embodiment of this application, N quiet element fields and resource reservation element fields may be set in the management frame. The resource reservation element field uses a regular resource reservation element field to reserve the N first reserved resources for the first traffic, as shown in (a) in FIG. 23. The N quiet element fields one-to-one correspond to the N first reserved resources. Each quiet element field sets one quiet interval for the legacy terminal. In other words, each quiet interval corresponds to one of the N reserved resources set by the regular resource reservation element field, as shown in (b) in FIG. 23. When the management frame sent by the AP includes both the quiet element fields and the regular resource reservation element field, the EHT terminal receives the management frame, ignores the quiet element fields, and contends for a reserved resource indicated by the regular resource reservation element field. After receiving the management frame, the legacy terminal is quiet in the quiet interval indicated by the quiet element fields. In this embodiment of this application, the quiet interval set by the N quiet element fields is completely the same as the N first reserved resources corresponding to the regular resource reservation element field. Therefore, the legacy terminal may be quiet on the resource reserved for the first traffic (the EHT terminal), and transmission of the first traffic by the EHT terminal is not affected.

Further, to reduce signaling overheads, when the management frame includes the N quiet element fields, the resource reservation element field may use a short regular resource reservation element field. In this case, the legacy terminal is quiet in the quiet interval indicated by the quiet element fields, and the EHT terminal sets resource reservation based on the quiet interval indicated by the quiet element fields.

Similar to Example 1, in this embodiment, if the first traffic is burst traffic, and transmission of the first traffic is not completed in the reserved resource, the AP sends an action frame on the reserved resource to trigger the temporarily reserved resource for the first traffic. Different from Example 1, in this embodiment, considering the legacy terminal, a network allocation vector (network allocation vector, NAV) NAV of the legacy terminal may be set by using a duration field of a media access control (media access control, MAC) frame, to set the temporarily reserved resource.

It should be understood that, if the AP still has the temporarily reserved resource after sending the first traffic, the AP may send the action frame for reservation release. For example, the action frame carries the resource reservation release element field. The EHT terminal receives the action frame and releases the reserved resource. The legacy terminal cannot identify the resource reservation release element field, and therefore remains quiet.

Example 3: Both a sleeping terminal (generally a low-power-consumption terminal) and the EHT terminal coexist in the network. The sleeping terminal does not monitor each management frame. Therefore, the sleeping terminal may miss information of the AP for reserving a resource for the first traffic, and therefore does not back off for the first traffic. In this case, a delay requirement of the first traffic cannot be ensured.

Therefore, in this embodiment of this application, the N first reserved resources may be reserved for the first traffic in a manner of reserving a resource for the first traffic in the second scenario. For example, the AP sets the N first reserved resources for the first traffic between two TBTTs, and an interval between any two first reserved resources is less than or equal to half of a maximum delay allowed by the first traffic.

It should be understood that, for a STA in a common power save mode, the STA periodically wakes up (wake up) to receive each beacon frame of the AP, to detect whether the AP has buffered downlink data to be sent. If the AP sets a reserved resource for the first traffic, the STA can update reserved resource information in a timely manner, and does not send a PS-Poll frame on the reserved resource.

However, a terminal in a WNM sleep mode does not monitor each beacon frame, and may miss information of the AP for reserving a resource for the first traffic. Therefore, the AP may include the resource reservation element field in the beacon frame corresponding to the TBTT in which the terminal in the WNM sleep mode wakes up. In this way, the terminal in the WNM sleep mode receives the beacon frame, and may determine, based on the resource reservation element field in the beacon frame, the resource reserved by the AP for the first traffic, so that the terminal in the WNM sleep mode may not occupy the resource reserved for the first traffic to send an uplink frame.

It should be understood that, if the terminal in the WNM sleep mode sleeps before the AP sets the reserved resource for the first traffic, wakes up at a non-TBTT moment after the AP sets the reserved resource, and attempts to send an uplink frame to change the PS mode, the reserved resource may be interfered with. In this case, it may be considered that interference caused by the terminal in the WNM sleep mode to the first traffic (the EHT terminal) is inter-system interference. If transmission of the first traffic cannot be completed on the reserved resource, the EHT terminal may request the temporarily reserved resource from the AP by using a temporary resource reservation element field.

For a terminal in a TWT mode, the AP and the terminal in the TWT mode establish trigger-enabled TWT. The terminal waits for the AP to send a trigger frame and does not initiate uplink transmission. If a terminal does not support trigger-enabled TWT, the terminal may actively contend for a channel. In this case, interference caused by the terminal in the TWT mode to the first traffic (the EHT terminal) is inter-system interference. If transmission of the first traffic cannot be completed on the reserved resource, the EHT terminal may request the temporarily reserved resource from the AP by using the temporary resource reservation element field.

The AP sends, on the reserved resource, an action frame carrying a temporary resource reservation setup element field, to trigger the temporarily reserved resource. For example, FIG. 24 is a schematic diagram of a format of a temporary resource reservation setup element field. A resource reservation offset field may indicate a time offset between the temporarily reserved resource and a current frame. A resource reservation duration field may indicate resource reservation duration. A resource reservation mode field may indicate a resource reservation mode. For a sleeping low-power-consumption terminal, the AP may offset start time of the temporarily reserved resource by current resource reservation by using the resource reservation offset field in the temporary resource reservation setup element field, so that a period of time is reserved for the sleeping terminal to enter a sleeping state again after the sleeping terminal completes transmission.

Example 4: In this embodiment of this application, specific traffic (for example, traffic having a high delay requirement, also referred to as low-delay traffic) and common traffic (for example, traffic having a low delay requirement) are allowed to reuse the N first reserved resources. In other words, the specific traffic and the common traffic are allowed to be transmitted in a hybrid manner on the N first reserved resources. That is, this embodiment of this application supports OFDMA transmission. This can improve resource utilization, and can also improve traffic transmission efficiency of an entire system.

In an example, the first indication information further indicates that the low-delay traffic is allowed to contention-based access partial frequency domain resources in the reserved resources, and/or the first indication information further indicates that the partial frequency domain resources in the reserved resources are used to schedule or transmit the low-delay traffic. For example, when the AP occupies a wide channel, the AP may choose to reserve partial frequency domain resources of the channel for the low-delay traffic to contention-based access, and another terminal or traffic may be allowed to use frequency domain resources, other than the partial frequency domain resources, of the channel.

Specifically, when setting a reserved resource, the AP may clearly reserve a specific frequency resource for low-delay traffic in a period of duration (for example, first duration). The STA remains quiet on all frequencies in the first duration on the reserved resource, and does not actively initiate uplink transmission. However, before a start moment of the first duration on the reserved resource, if the STA transmits data, it should be ensured that transmission is completed before the start moment.

In the first duration, the AP may preferentially schedule low-delay traffic by using a trigger frame. For downlink low-delay traffic, the AP sends downlink low-delay traffic to a plurality of terminals on a first part of frequency domain resources in the reserved resources. When there is a large volume of downlink low-delay traffic, the AP may choose to send the downlink low-delay traffic on the remaining frequency domain resource in the reserved resources other than the first part of frequency domain resources. If some remaining frequency domain resources are idle, the AP may choose to send the common traffic on the remaining frequency domain resources. When there is a small volume of downlink low-delay traffic, the AP may choose to send the low-delay traffic and the common traffic on the first part of frequency domain resources in the reserved resources. The AP may send the common traffic on the remaining frequency domain resource in the reserved resources other than the first part of frequency domain resources. For uplink traffic, the AP obtains uplink traffic information (including low-delay traffic and other uplink traffic) of the STA through inquiry, and schedules the low-delay traffic and the common traffic of the STA by using the trigger frame based on the uplink traffic information.

It should be understood that, for OFDMA based on CMSA contention, the AP can perform transmission only after contending for a TXOP. However, when network congestion occurs, a delay for the AP to contend for the TXOP may be long, and a delay requirement of low-delay traffic cannot be met. However, in this embodiment of this application, because OFDMA transmission is performed on a reserved resource, a determined channel access delay exists, and a delay requirement of low-delay traffic can be met.

Example 5: It should be understood that the 802.11be has low-delay traffic, and a terminal earlier than Wi-Fi 6 has regular traffic. When an 802.11be terminal (for example, the EHT terminal) and the terminal (for example, the legacy terminal) earlier than Wi-Fi 6 exist in the network, in this embodiment of this application, a quiet element field may be used to reserve a resource, so that a determined delay of low-delay traffic in the 802.11be can still be ensured.

Specifically, the AP adds the quiet element field to the management frame, for example, a beacon frame, and periodically quietens, by using the beacon frame, all STAs in a cell served by the AP. When a plurality of intra-frequency APs exist in the network and the plurality of intra-frequency APs belong to a same AP coordination group, other APs in the coordination group monitor a beacon frame of a primary AP through an air interface to obtain TBTT of the primary AP, and adjust TBTTs of cells served by the other APs to be the same as that of the primary AP. For a specific implementation in which the AP reserves a resource for low-delay traffic by using the management frame, refer to the foregoing method. In other words, an interval Tᵣ between two adjacent reserved resources is determined based on a delay requirement of the low-delay traffic, and duration (namely, duration of the reserved resource) occupied by each reserved resource is determined based on a traffic volume of the low-delay traffic.

Because the quiet element field can quieten the common traffic, the AP schedules 802.11be low-delay traffic by using the trigger frame. It should be understood that, in the reserved resources, if the low-delay traffic has been sent, the AP may also schedule the common traffic. In addition, when sending the low-delay traffic, the AP may use an EDCA parameter with a low priority to contend for a channel, so that common traffic in a local BSS may not affect transmission of low-delay traffic in other BSSs.

In the channel access method provided in this embodiment of this application, the AP may reserve, for the first traffic, a time-frequency resource for contention and use. In other words, only the first traffic is allowed to contention-based access the time-frequency resource, and traffic other than the first traffic is quiet on the time-frequency resource. Because only the first traffic is allowed to contention-based access the reserved time-frequency resource, an opportunity for the first traffic to access a channel may be increased, and a transmission delay of the first traffic is shortened.

In the foregoing embodiments provided in this application, the methods provided in embodiments of this application are separately described from a perspective of interaction between the first AP and the first device (the AP or the STA). To implement the functions in the methods provided in embodiments of this application, the AP and the STA may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

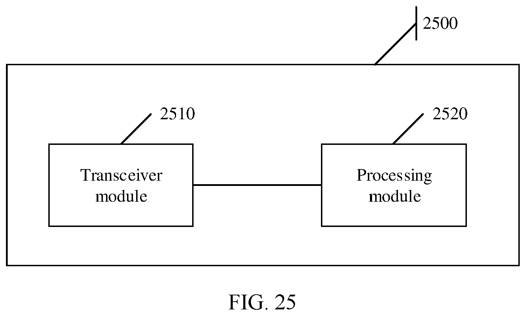

FIG. 25 is a schematic block diagram of a communication apparatus 2500 according to an embodiment of this application. The communication apparatus 2500 may correspondingly implement functions or steps implemented by the first AP or the first device in the foregoing method embodiments. The communication apparatus may include a processing module 2510 and a transceiver module 2520. Optionally, the communication apparatus may further include a storage unit. The storage unit may be configured to store instructions (code or a program) and/or data. The processing module 2510 and the transceiver module 2520 may be coupled to the storage unit. For example, the processing module 2510 may read the instructions (the code or the program) and/or the data in the storage unit, to implement a corresponding method. The foregoing units may be disposed independently, or may be partially or completely integrated.

In some possible implementations, the communication apparatus 2500 can correspondingly implement behavior and functions of the first device in the method embodiments. For example, the communication apparatus 2500 may be an AP or a STA, or may be a component (for example, a chip or a circuit) used in the AP or the STA. The transceiver module 2520 may be configured to perform all receiving or sending operations performed by the first device in the embodiment shown in FIG. 6, FIG. 20, or FIG. 21, for example, S601 to S604 in the embodiment shown in FIG. 6, and/or another process used to support the technology described in this specification; for example, S2002, S2003, S2005, and S2006 in the embodiment shown in FIG. 20, and/or another process used to support the technology described in this specification; and for another example, S2102 and S2104 in the embodiment shown in FIG. 21, and/or another process used to support the technology described in this specification. The processing module 2510 is configured to perform all operations, except sending and receiving operations, performed by the first device in the embodiment shown in FIG. 6, FIG. 20, or FIG. 21, for example, determining N first reserved resources, and/or another process used to support the technology described in this specification; and for example, S2001 and S2004 in the embodiment shown in FIG. 20, and/or another process used to support the technology described in this specification.

In some embodiments, the transceiver module 2520 is configured to receive a management frame from the first AP, where the management frame includes first indication information, the first indication information indicates at least one first reserved resource that first traffic is allowed to contention-based access, and the at least one first reserved resource includes only a time-frequency resource reserved for the first traffic. The transceiver module 2520 is further configured to initiate channel access on the at least one first reserved resource determined by the processing module, and transmits the first traffic.

In an optional implementation, the at least one first reserved resource is some time-frequency resources between target beacon transmission times (target beacon transmission times, TBTTs). For example, the at least one first reserved resource may be a channel of an entire bandwidth, or may be some resource units (resource unit, RU) of a channel.

In a possible implementation, the AP is an AP in a multi-link device (Multi-link device, MLD) AP. The first AP operates on a plurality of links. The first indication information indicates a time-frequency resource of one of the plurality of links, or the first indication information indicates some time-frequency resources of a first link of the plurality of links.

In an optional implementation, an interval *Tᵣ* between two adjacent first reserved resources is determined based on a delay requirement of the first traffic, and duration occupied by each first reserved resource is determined based on a traffic volume of the first traffic.

In an optional implementation, the management frame includes second indication information. The second indication information indicates at least one second reserved resource that second traffic is allowed to contention-based access. The at least one second reserved resource includes only a time-frequency resource reserved for the second traffic. The at least one second reserved resource does not overlap the at least one first reserved resource.

In an optional implementation, *Tᵣ* satisfies *T*ᵣ ≤ *t_{delay}*/2, where *t_{delay}* is a maximum delay allowed by the first traffic.

In an optional implementation, the transceiver module 2520 is further configured to receive an action (action) frame from the first AP, where the action frame indicates a third reserved resource and indicates the first device to continue the first traffic on the third reserved resource, a start moment of the third reserved resource is later than an end moment of a first reserved resource in the at least one first reserved resource, the action frame is sent before the end moment of the first reserved resource, and transmission duration of the traffic volume of the first traffic is greater than duration occupied by the first reserved resource.

In an optional implementation, the first indication information further indicates that the first traffic is allowed to contention-based access partial frequency domain resources in the at least one first reserved resource, and/or the first indication information further indicates that the partial frequency domain resources in the at least one first reserved resource are used to schedule or transmit the first traffic.

In an optional implementation, the management frame is a beacon frame, an association response frame, a probe response frame, or an action frame.

In an optional implementation, the first indication information is carried in a first element field and/or a quiet element field included in the management frame.

In an optional implementation, there are N quiet element fields, and the N quiet element fields one-to-one correspond to N first reserved resources.

In an optional implementation, the management frame includes a resource reservation element field and a quiet element field. If the communication apparatus 2500 is a legacy terminal, the processing module 2510 is configured to perform quieting based on a quiet interval indicated by the quiet element field, or if the communication apparatus 2500 is a non-legacy terminal, the processing module 2510 is configured to set the at least one first reserved resource based on a quiet interval indicated by the quiet element field.

In an optional implementation, the communication apparatus 2500 is a second AP located in a same AP coordination group as the first AP. The first traffic includes traffic between the first AP and the second AP. The processing module 2510 is further configure to determine that a moment at which a management frame is sent is *T_{B} +* m × *Tᵣ,* where T_{B} is a sending moment at which the first AP sends a management frame, and m is an integer greater than or equal to 0; and/or the processing module 2510 is further configured to determine that a resource reservation period of a cell served by the communication apparatus 2500 is set to Tᵣ.

In an optional implementation, the transceiver module 2520 is further configured to send, by the first device, a first request message to the first AP, where the first request message is used to request the first AP to reserve a resource for the first traffic of the communication apparatus.

In an optional implementation, when the processing module 2510 determines that a status of a network for transmitting the first traffic meets a preset trigger condition, the transceiver module 2520 sends the first request message to the first AP, where the preset trigger condition is that sending delays of a plurality of data packets exceed a preset threshold.

In an optional implementation, the plurality of data packets are L consecutive data packets.

In an optional implementation, the plurality of data packets are L data packets in P data packets.

In an optional implementation, exceeding the preset threshold further includes reaching K times the preset threshold.

It should be understood that the processing module 2510 in this embodiment of this application may be implemented by using a processor or a processor-related circuit component, and the transceiver module 2520 may be implemented by using a transceiver, a transceiver-related circuit component, or a communication interface.

In some possible implementations, the communication apparatus 2500 can correspondingly implement behavior and functions of the first AP in the method embodiments. For example, the communication apparatus 2500 may be an AP, or may be a component (for example, a chip or a circuit) used in the AP. The transceiver module 2520 may be configured to perform all receiving or sending operations performed by the first AP in the embodiment shown in FIG. 6, FIG. 20, or FIG. 21, for example, S601 to S604 in the embodiment shown in FIG. 6, and/or another process used to support the technology described in this specification; for example, S2002, S2003, S2005, and S2006 in the embodiment shown in FIG. 20, and/or another process used to support the technology described in this specification; and for another example, S2102 and S2104 in the embodiment shown in FIG. 21, and/or another process used to support the technology described in this specification. The processing module 2510 is configured to perform all operations, except sending and receiving operations, performed by the first AP in the embodiment shown in FIG. 6, FIG. 20, or FIG. 21, for example, generating the foregoing management frame, and/or another process used to support the technology described in this specification; and for example, S2101 and S2103 in the embodiment shown in FIG. 21, and/or another process used to support the technology described in this specification.

In an example, the processing module 2510 is configured to generate a management frame. The transceiver module 2520 is configured to send the management frame to a first device. The management frame includes first indication information. The first indication information indicates at least one first reserved resource that first traffic is allowed to contention-based access. The at least one first reserved resource includes only a time-frequency resource reserved for the first traffic.

In an optional implementation, the reserved time-frequency resource is some time-frequency resources between TBTTs.

In an optional implementation, the first AP is an AP in a multi-link device MLD AP. The first AP operates on a plurality of links. The first indication information indicates a time-frequency resource of one of the plurality of links, or the first indication information indicates some time-frequency resources of a first link of the plurality of links.

In an optional implementation, an interval *Tᵣ* between two adjacent first reserved resources is determined based on a delay requirement of the first traffic, and duration occupied by each first reserved resource is determined based on a traffic volume of the first traffic.

In an optional implementation, *Tᵣ* satisfies *T*ᵣ ≤ *t_{delay}*/2, where *t_{delay}* is a maximum delay allowed by the first traffic.

In an optional implementation, the transceiver module 2520 is further configured to send an action frame to the first device, where the action frame indicates a third reserved resource and indicates the first device to continue the first traffic on the third reserved resource, a start moment of the third reserved resource is later than an end moment of a first reserved resource in the at least one first reserved resource, the action frame is sent before the end moment of the first reserved resource, and transmission duration of the traffic volume of the first traffic is greater than duration occupied by the first reserved resource.

In an optional implementation, the first indication information further indicates that the first traffic is allowed to contention-based access partial frequency domain resources in the at least one first reserved resource, and/or the first indication information further indicates that the partial frequency domain resources in the at least one first reserved resource are used to schedule or transmit the first traffic.

In an optional implementation, the management frame is a beacon frame, an association response frame, a probe response frame, or an action frame.

In an optional implementation, the first indication information is carried in a first element field and/or a quiet element field included in the management frame.

In an optional implementation, there are N quiet element fields, and the N quiet element fields one-to-one correspond to N first reserved resources.

In an optional implementation, the management frame includes a resource reservation element field and a quiet element field. If the first device is a legacy terminal, the processing module 2510 is configured to perform quieting based on a quiet interval indicated by the quiet element field, or if the first device is a non-legacy terminal, the processing module 2510 is configured to set the at least one first reserved resource based on a quiet interval indicated by the quiet element field.

In an optional implementation, the communication apparatus is an AP located in an AP coordination group. The first traffic includes traffic between the communication apparatus and a primary AP. The processing module 2510 is further configure to determine that a moment at which a management frame is sent is *T_{B}* + m × *Tᵣ,* where T_{B} is a moment at which the primary AP sends a management frame, and m is an integer greater than or equal to 0; and/or the processing module 2510 is further configured to determine that a resource reservation period of a cell served by the communication apparatus is set to Tᵣ.

It should be understood that the processing module 2510 in this embodiment of this application may be implemented by using a processor or a processor-related circuit component, and the transceiver module 2520 may be implemented by using a transceiver, a transceiver-related circuit component, or a communication interface.

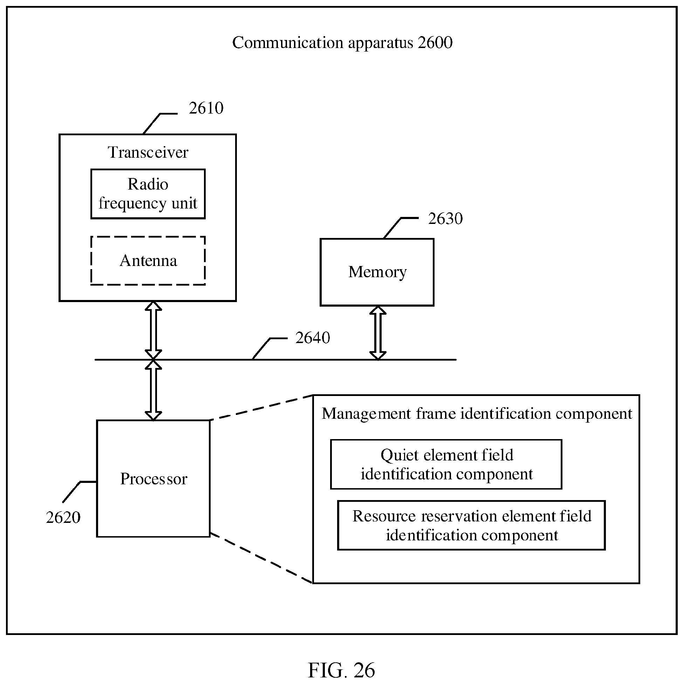

FIG. 26 shows a communication apparatus 2600 according to an embodiment of this application. The communication apparatus 2600 may be an AP, and can implement functions of the first AP in the methods provided in embodiments of this application. Alternatively, the communication apparatus 2600 may be an AP or a STA, and can implement functions of the first device in the methods provided in embodiments of this application. Alternatively, the communication apparatus 2600 may be an apparatus that can support the first AP to implement corresponding functions in the methods provided in embodiments of this application, or an apparatus that can support the first device to implement corresponding functions in the methods provided in embodiments of this application. The communication apparatus 2600 may be a chip or a chip system. In this embodiment of this application, the chip system may include a chip, or may include a chip and another discrete component.

In hardware implementation, the transceiver module 2520 may be a transceiver 2610.

The communication apparatus 2600 includes at least one processor 2620, configured to implement or support the communication apparatus 2600 to implement functions of the first device or the first AP in the methods provided in embodiments of this application, for example, generating the foregoing management frame. The processor may include a management frame identification component. The management frame identification component may further include a quiet element field identification component and/or a resource reservation element identification field. When the management frame includes only a resource reservation element field, the communication apparatus 2600 contends for a reserved resource indicated by the resource reservation element field. When the management frame includes a resource reservation element field and a quiet element field, if the communication apparatus 2600 is an EHT terminal, the communication apparatus 2600 contends for the reserved resource indicated by the resource reservation element field, or if the communication apparatus is a legacy terminal, the communication apparatus is quiet in a period indicated by the quiet element field. Specifically, the management frame identification component may be configured to use the channel access method provided in embodiments of this application.

The communication apparatus 2600 may further include at least one memory 2630, configured to store program instructions and/or data. The memory 2630 is coupled to the processor 2620. The coupling in this embodiment of this application may be an indirect coupling or a communication connection between apparatuses, units, or modules in an electrical form, a mechanical form, or another form, and is used for information exchange between the apparatuses, the units, or the modules. The processor 2620 may cooperate with the memory 2630. The processor 2620 may execute the program instructions and/or the data stored in the memory 2630, so that the communication apparatus 2600 implements a corresponding method. At least one of the at least one memory may be located in the processor.

The communication apparatus 2600 may further include the transceiver 2610, configured to communicate with another device by using a transmission medium, so that an apparatus in the communication apparatus 2600 may communicate with the another device. For example, when the communication apparatus is a terminal, the another device is a network device. Alternatively, when the communication apparatus is a network device, the another device is a terminal. The processor 2620 may send and receive data by using the transceiver 2610. The transceiver 2610 may be specifically a transceiver. The communication apparatus 2600 may further include a radio frequency unit. The radio frequency unit may be independent of the communication apparatus 2600, or may be integrated into the communication apparatus 2600. Certainly, the transceiver 2610 may further include an antenna, for example, a remote antenna independent of the communication apparatus 2600, or an antenna integrated into the communication apparatus 2600.

A specific connection medium between the transceiver 2610, the processor 2620, and the memory 2630 is not limited in this embodiment of this application. In this embodiment of this application, the memory 2630, the processor 2620, and the transceiver 2610 are connected through a bus 2640 in FIG. 26. A thick line is used to represent the bus in FIG. 26. A manner of connection between other components is merely an example for description, and imposes no limitation. The bus may be classified into an address bus, a data bus, a control bus, and the like. For ease of expression, only a bold line is used to represent the bus in FIG. 26, but this does not mean that there is only one bus or one type of bus.

In this embodiment of this application, the processor 2620 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed and completed by a hardware processor, or may be performed and completed by using a combination of hardware and software modules in the processor.

In this embodiment of this application, the memory 2630 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

It should be noted that the communication apparatus in the foregoing embodiments may be a terminal, a circuit, a chip used in a terminal, or another combined component, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

As a possible product form, the AP or the STA described in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the APs in various product forms have any function of the AP in the foregoing method embodiments. Details are not described herein again. The STAs in various forms have any function of the STA in the foregoing method embodiments. Details are not described herein again.

An embodiment of this application further provides a communication system. Specifically, the communication system includes a STA and an AP, or may further include more APs and access network devices. For example, the communication system includes a STA and an AP that are configured to implement a related function in FIG. 1, FIG. 15 or FIG. 16.

The AP is separately configured to implement functions of the network part related to FIG. 1, FIG. 2, FIG. 16, or FIG. 17. The STA is configured to implement functions of the STA related to FIG. 1, FIG. 2, FIG. 16, or FIG. 17. For example, the STA may perform S601 to S604 in the embodiment shown in FIG. 6. The AP may perform S601 to S604 in the embodiment shown in FIG. 6. For another example, the STA may perform, for example, S2001 to S2006 in the embodiment shown in FIG. 20. The AP may perform S2003, S2004, S2005, and S2006 in the embodiment shown in FIG. 20. For another example, the STA may perform, for example, S2002 and S2004 in the embodiment shown in FIG. 21. The AP may perform S2001 and S2003 in the embodiment shown in FIG. 21.

An embodiment of this application further provides a computer-readable storage medium, including instructions. When the instructions are run on a computer, the computer is enabled to perform the method performed by the AP or the STA in FIG. 6, FIG. 20, or FIG. 21.

An embodiment of this application further provides a computer program product, including computer program code. When the computer program code is run on a computer, the computer is enabled to perform the method performed by the AP or the STA in FIG. 16, FIG. 20, or FIG. 21.

An embodiment of this application provides a chip system. The chip system includes a processor and may further include a memory, and is configured to implement a function of the AP or the STA in the foregoing methods. The chip system may include a chip, or may include a chip and another discrete component.

An embodiment of this application further provides a communication apparatus, including a processor and an interface. The processor is configured to perform the information processing method in any one of the foregoing method embodiments.

It should be understood that the communication apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

It should be understood that the terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally represents an "or" relationship between associated objects. At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely used to distinguish between different indication information, and do not indicate different priorities, importance, or the like of the two types of information.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the word "example" is intended to describe a concept in a specific manner.

All or some of the methods in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims.

## Claims

1. A channel access method, comprising:
receiving (S601), by a first device, a management frame from a first access point AP, wherein the management frame comprises first indication information, the first indication information indicates at least one first reserved resource that first traffic is allowed to contention-based access, and the at least one first reserved resource only comprises a time domain resource reserved for the first traffic; and
initiating (S602), by the first device, channel access on the at least one first reserved resource.

2. The method according to claim 1, wherein the reserved time domain resource is partial time domain resources between target beacon transmission times TBTTs.

3. The method according to claim 1 or 2, wherein the first AP is an AP affiliated with a multi-link device MLD AP, the first AP operates on a plurality of links, the first indication information indicates a time domain resource of one of the plurality of links, or the first indication information indicates partial time domain resources of a first link of the plurality of links.

4. The method according to any one of claims 1 to 3, wherein an interval *Tᵣ* between two adjacent first reserved resources is determined based on a delay requirement of the first traffic, and duration occupied by each first reserved resource is determined based on a traffic volume of the first traffic.

5. The method according to claim 4, wherein *Tᵣ* satisfies *T*ᵣ ≤ *t_{delay}*/2, and *t_{delay}* is a maximum delay allowed by the first traffic.

6. The method according to any one of claims 1 to 5, wherein the first indication information further indicates that the first traffic is allowed to contention-based access partial frequency domain resources in the at least one first reserved resource, and/or the first indication information further indicates that the frequency domain resources in the at least one first reserved resource are used to schedule or transmit the first traffic.

7. The method according to any one of claims 1 to 6, wherein the management frame is a beacon frame, an association response frame, a probe response frame, or an action frame.

8. The method according to any one of claims 1 to 7, wherein the management frame comprises a first element field and a quiet element field.

9. The method according to claim 8, wherein the first indication information is carried in the first element field.

10. The method according to claim 8 or 9, wherein the quantity of the quiet element field is N, and N quiet intervals indicated by the N quiet element fields one-to-one correspond to the at least one first reserved resource, where N is an integer greater than or equal to 1.

11. The method according to any one of claims 1 to 10, wherein the method further comprises:
receiving (S604), by the first device, an action frame from the first AP, wherein the action frame indicates a third reserved resource and indicates the first device to continue the first traffic on the third reserved resource, a start moment of the third reserved resource is later than an end moment of one first reserved resource in the at least one first reserved resource, the action frame is sent before the end moment of the first reserved resource, and transmission duration of the traffic volume of the first traffic is greater than duration occupied by the first reserved resource.

12. The method according to any one of claims 3 to 11, wherein the first device is a second AP affiliated with a same AP coordination group as the first AP, the first traffic comprises traffic between the first AP and the second AP, a moment at which the first device sends a management frame is *T_{B}* + m × *Tᵣ,* T_{B} is a sending moment of the management frame, and m is an integer greater than or equal to 0; and/or
a resource reservation period of a cell served by the first device is set to Tᵣ.

13. A chip, wherein the chip comprises at least one processor and an interface, the processor is configured to read and execute instructions stored in a memory, and when the instructions are run, the chip is enabled to perform the method according to any one of claims 1 to 12.

14. A computer-readable storage medium, wherein the computer-readable storage medium stores a computer program, the computer program comprises program instructions, and when the program instructions are executed by a computer, the computer is enabled to perform the method according to any one of claims 1 to 12.

15. An apparatus, configured to implement the method according to any one of claims 1 to 12.

## Patentansprüche

1. Kanalzugriffsverfahren, umfassend:
Empfangen (S601), durch eine erste Vorrichtung, eines Verwaltungsrahmens von einem ersten Zugriffspunkt, AP, wobei der Verwaltungsrahmen erste Angabeinformationen umfasst, die ersten Angabeinformationen mindestens eine erste reservierte Ressource angeben, bei der es erstem Datenverkehr erlaubt ist, konkurrenzbasiert auf diese zuzugreifen, und die mindestens eine erste reservierte Ressource nur eine Zeitdomänenressource umfasst, die für den ersten Datenverkehr reserviert ist; und
Initiieren (S602), durch die erste Vorrichtung, eines Kanalzugriffs auf die mindestens eine erste reservierte Ressource.

2. Verfahren nach Anspruch 1, wobei die reservierte Zeitdomänenressource teilweise Zeitdomänenressourcen zwischen Ziel-Beacon-Übertragungszeiten, TBTTs, darstellen.

3. Verfahren nach Anspruch 1 oder 2, wobei der erste AP ein AP ist, der mit einem Multilink-Vorrichtungs-AP, MLD-AP, verbunden ist, der erste AP auf einer Vielzahl von Links arbeitet, die ersten Angabeinformationen eine Zeitdomänenressource eines der Vielzahl von Links angeben oder die ersten Angabeinformationen teilweise Zeitdomänenressourcen eines ersten Links der Vielzahl von Links angeben.

4. Verfahren nach einem der Ansprüche 1 bis 3, wobei ein Intervall *Tᵣ* zwischen zwei benachbarten ersten reservierten Ressourcen basierend auf einer Verzögerungsanforderung des ersten Datenverkehrs bestimmt wird und eine Dauer, die durch jede erste reservierte Ressource eingenommen wird, basierend auf einem Datenverkehrsvolumen des ersten Datenverkehrs bestimmt wird.

5. Verfahren nach Anspruch 4, wobei *Tᵣ T*ᵣ ≤ *t_{delay}*/2 erfüllt und *t_{delay}* eine maximale Verzögerung ist, die durch den ersten Datenverkehr erlaubt wird.

6. Verfahren nach einem der Ansprüche 1 bis 5, wobei die ersten Angabeinformationen ferner angeben, dass es dem ersten Datenverkehr erlaubt ist, auf teilweise Frequenzdomänenressourcen in der mindestens einen ersten reservierten Ressource konkurrenzbasiert zuzugreifen, und/oder die ersten Angabeinformationen ferner angeben, dass die Frequenzdomänenressourcen in der mindestens einen ersten reservierten Ressource dazu verwendet werden, den ersten Datenverkehr zu planen oder zu übertragen.

7. Verfahren nach einem der Ansprüche 1 bis 6, wobei der Verwaltungsrahmen ein Beacon-Rahmen, ein Zuordnungsantwortrahmen, ein Sondierungsantwortrahmen oder ein Handlungsrahmen ist.

8. Verfahren nach einem der Ansprüche 1 bis 7, wobei der Verwaltungsrahmen ein erstes Elementfeld und ein Ruheelementfeld umfasst.

9. Verfahren nach Anspruch 8, wobei die ersten Angabeinformationen in dem ersten Elementfeld enthalten sind.

10. Verfahren nach Anspruch 8 oder 9, wobei die Quantität des Ruheelementfelds N ist und N Ruheintervalle, die durch die N Ruheelementfelder angegeben werden, eins zu eins der mindestens einen ersten reservierten Ressource entsprechen, wobei N eine Ganzzahl größer oder gleich 1 ist.

11. Verfahren nach einem der Ansprüche 1 bis 10, wobei das Verfahren ferner Folgendes umfasst:
Empfangen (S604), durch die erste Vorrichtung, eines Handlungsrahmens von dem ersten AP, wobei der Handlungsrahmen eine dritte reservierte Ressource angibt und der ersten Vorrichtung angibt, den ersten Datenverkehr auf der dritten reservierten Ressource fortzusetzen, ein Startzeitpunkt der dritten reservierten Ressource später als ein Endzeitpunkt einer ersten reservierten Ressource in der mindestens einen ersten reservierten Ressource ist, der Handlungsrahmen vor dem Endzeitpunkt der ersten reservierten Ressource gesendet wird und die Übertragungsdauer des Datenverkehrsvolumens des ersten Datenverkehrs größer als die Dauer ist, die durch die erste reservierte Ressource eingenommen wird.

12. Verfahren nach einem der Ansprüche 3 bis 11, wobei die erste Vorrichtung ein zweiter AP ist, der mit einer gleichen AP-Koordinationsgruppe wie der erste AP verbunden ist, der erste Datenverkehr Datenverkehr zwischen dem ersten AP und dem zweiten AP umfasst, ein Zeitpunkt, zu dem die erste Vorrichtung einen Verwaltungsrahmen sendet, *T_{B}* + m × *Tᵣ* ist, T_{B} ein Sendezeitpunkt des Verwaltungsrahmens ist und m eine Ganzzahl größer oder gleich 0 ist; und/oder
ein Ressourcenreservierungszeitraum einer Zelle, die durch die erste Vorrichtung bedient wird, auf Tᵣ eingestellt ist.

13. Chip, wobei der Chip mindestens einen Prozessor und eine Schnittstelle umfasst, der Prozessor dazu konfiguriert ist, Anweisungen, die in einem Speicher gespeichert sind, zu lesen und auszuführen, und, wenn die Anweisungen ausgeführt werden, es dem Chip ermöglicht wird, das Verfahren nach einem der Ansprüche 1 bis 12 durchzuführen.

14. Computerlesbares Speichermedium, wobei das computerlesbare Speichermedium ein Computerprogramm speichert, das Computerprogramm Programmanweisungen umfasst und, wenn die Programmanweisungen durch einen Computer ausgeführt werden, es dem Computer ermöglicht wird, das Verfahren nach einem der Ansprüche 1 bis 12 durchzuführen.

15. Gerät, das dazu konfiguriert ist, das Verfahren nach einem der Ansprüche 1 bis 12 umzusetzen.

## Revendications

1. Procédé d'accès à un canal, comprenant :
la réception (S601), par un premier dispositif, d'une trame de gestion, à partir d'un premier point d'accès AP, dans lequel la trame de gestion comprend de premières informations d'indication, les premières informations d'indication indiquent au moins une première ressource réservée à laquelle un premier trafic est autorisé à accéder par contention, et l'au moins une première ressource réservée comprend uniquement une ressource de domaine de temps réservée au premier trafic ; et
l'initiation (S602), par le premier dispositif, de l'accès au canal sur l'au moins une première ressource réservée.

2. Procédé selon la revendication 1, dans lequel la ressource de domaine temporel réservée est une ressource de domaine de temps partiel entre des temps de transmission de balise cible TBTT.

3. Procédé selon la revendication 1 ou 2, dans lequel le premier AP est un AP affilié à un AP de dispositif multi-liaison, MLD, le premier AP fonctionne sur une pluralité de liaisons, les premières informations d'indication indiquent une ressource de domaine de temps de l'une de la pluralité de liaisons, ou les premières informations d'indication indiquent des ressources de domaine de temps partiel d'une première liaison de la pluralité de liaisons.

4. Procédé selon l'une quelconque des revendications 1 à 3, dans lequel un intervalle *Tᵣ* entre deux premières ressources réservées adjacentes est déterminé sur la base d'une exigence de retard du premier trafic, et la durée occupée par chaque première ressource réservée est déterminée sur la base d'un volume de trafic du premier trafic.

5. Procédé selon la revendication 4, dans lequel *Tᵣ* satisfait un retard *T*ᵣ ≤ *t*/2, et un retard *t* est un retard maximal autorisé par le premier trafic.

6. Procédé selon l'une quelconque des revendications 1 à 5, dans lequel les premières informations d'indication indiquent en outre que le premier trafic est autorisé à accéder par contention à des ressources de domaine de fréquence partielles dans l'au moins une première ressource réservée, et/ou les premières informations d'indication indiquent en outre que les ressources de domaine de fréquence dans l'au moins une première ressource réservée sont utilisées pour planifier ou transmettre le premier trafic.

7. Procédé selon l'une quelconque des revendications 1 à 6, dans lequel la trame de gestion est une trame de balise, une trame de réponse d'association, une trame de réponse de sonde ou une trame d'action.

8. Procédé selon l'une quelconque des revendications 1 à 7, dans lequel la trame de gestion comprend un premier champ d'élément et un champ d'élément silencieux.

9. Procédé selon la revendication 8, dans lequel les premières informations d'indication sont transportées dans le premier champ d'élément.

10. Procédé selon la revendication 8 ou 9, dans lequel la quantité du champ d'élément silencieux est N, et les N intervalles silencieux indiqués par les N champs d'élément silencieux correspondent un à un à l'au moins une première ressource réservée, où N est un entier supérieur ou égal à 1.

11. Procédé selon l'une quelconque des revendications 1 à 10, dans lequel le procédé comprend en outre :
la réception (S604), par le premier dispositif, d'une trame d'action à partir du premier AP, dans lequel la trame d'action indique une troisième ressource réservée et indique au premier dispositif de continuer le premier trafic sur la troisième ressource réservée, un moment de début de la troisième ressource réservée est postérieur à un moment de fin d'une première ressource réservée dans l'au moins une première ressource réservée, la trame d'action est envoyée avant le moment de fin de la première ressource réservée, et la durée de transmission du volume de trafic du premier trafic est supérieure à la durée occupée par la première ressource réservée.

12. Procédé selon l'une quelconque des revendications 3 à 11, dans lequel le premier dispositif est un second AP affilié à un même groupe de coordination AP que le premier AP, le premier trafic comprend le trafic entre le premier AP et le second AP, un moment auquel le premier dispositif envoie une trame de gestion est *T_{B}* + m × *Tᵣ*, T_{B} est un moment d'envoi de la trame de gestion, et m est un entier supérieur ou égal à 0 ; et/ou une période de réservation de ressources d'une cellule desservie par le premier dispositif est définie sur Tᵣ.

13. Puce, dans lequel la puce comprend au moins un processeur et une interface, le processeur est configuré pour lire et exécuter des instructions stockées dans une mémoire, et lorsque les instructions sont exécutées, la puce est activée pour réaliser le procédé selon l'une quelconque des revendications 1 à 12.

14. Support de stockage lisible par ordinateur, dans lequel le support de stockage lisible par ordinateur stocke un programme informatique, le programme informatique comprend des instructions de programme, et lorsque les instructions de programme sont exécutées par un ordinateur, l'ordinateur est activé pour réaliser le procédé selon l'une quelconque des revendications 1 à 12.

15. Appareil, configuré pour mettre en œuvre le procédé selon l'une quelconque des revendications 1 à 12.
